(19) Europäisches Patentamt

European Patent Office

Office européen des brevets

(11) **EP 1 433 810 A1**

(12) **EUROPEAN PATENT APPLICATION**

(43) Date of publication:
**30.06.2004 Bulletin 2004/27**

(51) Int Cl.⁷: **C08K 3/04**, C08L 67/02

(21) Application number: **03026662.1**

(22) Date of filing: **19.11.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **26.11.2002 US 304227**

(71) Applicant: **EASTMAN CHEMICAL COMPANY**
**Kingsport, TN 37660-5075 (US)**

(72) Inventors:
• **Quillen, Donna Rice**
  **Tennessee 37662 (US)**

• **Howell, Earl Edmondson, Jr.**
  **Tennessee 37662 (US)**
• **Stafford, Steven Lee**
  **Tennessee 37662 (US)**

(74) Representative:
**Wibbelmann, Jobst, Dr., Dipl.-Chem.**
**Wuesthoff & Wuesthoff,**
**Patent- und Rechtsanwälte,**
**Schweigerstrasse 2**
**81541 München (DE)**

(54) **Glassy carbon thermoplastic compositions**

(57)    A thermoplastic composition such as a polyester composition including polyethylene terephthalate polymers containing glassy carbon, and the preforms, bottles, sheets, rods, tubes, films and other articles made from these compositions.

Also, polyester compositions are provided which have a certain individual or combination of properties, including low coefficient of static friction, low coefficient of static friction and low haze or high L* or low positive b* or a combination thereof, and those having low L* and low positive b* at given reheat rates.

EP 1 433 810 A1

**Description**

This application claims the priority of US-application 10/304,227 filed on November 26, 2002, a copy of which has been filed together with this European patent application. The contents of the priority application is incorporated herein in its entirety by reference.

1. Background of the Invention

The use of polymer compositions, particularly compositions comprising poly(ethylene terephthalate) or copolymers thereof (hereinafter collectively referred to as "PET"), for example in the form of films, bottles and other containers is well known. When bottles or other containers (hereinafter collectively referred to as "containers") are used for containing fluids, e.g., water, juices and carbonated drinks, container-forming compositions, in the form of polymer chips or pellets, are usually formed into the container shape in a two stage process. First, a tube-shaped preform is injection molded. Second, the preform is heated above its glass transition temperature and blown into a mold with high pressure air in order to shape it into a bottle. A quartz infrared lamp is used to "reheat" the preform in the second stage. Typical lamp temperatures are 2000 - 3000 K, having a broad emission spectrum in the range of 500 to 2000 nm. The maximum light emission from quartz lamps occurs in the range of about 1100- 1200 nm. However, PET absorbs energy poorly in the region of 500 - 2000 nm. Thus, in order to maximize energy absorption from the lamps and increase the preform's "reheat" rate, infrared absorbing compounds are sometimes added to PET. Unfortunately, these materials also have a negative effect on the visual appearance of the PET bottle, causing it to darken and become less bright and more hazy. Since compounds with absorbance in the range of 400-700 nm appeared colored to the human eye, compounds that absorb in this range will impart color to the polymer.

A variety of black and gray body absorbing compounds have previously been used as reheat agents to improve the heat up characteristics of polyester under quartz lamps. A variety of infrared absorbing compounds can be added to PET to increase the reheat rate of the preforms. Such reheat additives include carbon black, graphite, antimony metal, black iron oxide, red iron oxide, inert iron compounds, spinel pigments, and infrared absorbing dyes. The amount of absorbing compounds that can be added to a polymer is limited by its impact on the visual properties of the polymer, such as brightness, which is a measure of transparency, and color.

Many if not all of these reheat additives significantly improve the reheat rate of polyethylene terephthalate preforms. The disadvantage of these additives is that cause a significant loss in brightness and/or clarity in the resin. To retain an acceptable level of brightness and color in the preform and resulting blown articles, the quantity of reheat additive is reduced, which in turn reduces the reheat rate. Thus, the type and amount of reheat additive added to a polyethylene terephthalate resin is adjusted to strike the desired balance between increasing the reheat rate and retaining acceptable brightness and color levels.

Accordingly, there remains a continual need to increase the reheat rate (or conversely lower the reheat time at a given temperature) of preforms. It would be ideal to simultaneously increase the reheat rate and reduce the rate at which L* degrades as the concentration of the reheat additive in a thermoplastic composition is increased.

Independent of efforts to increase the reheat rate of preforms while maintaining acceptable levels of L*, efforts have also been made to decrease the coefficient of static friction of bottles made from the preforms. Polyester compositions blown into bottles have smooth surfaces that cause the bottles to stick to each other when conveyed and palletized. The static coefficient of static friction between the bottles is sufficiently high that bottles will stick to each other and fall off the conveyers. Efforts to reduce the stickiness of bottles through the incorporation of additives such as fumed silica, amorphous silica, and talc have successfully reduced the coefficient of static friction relative to a control without an anti-stick additive, but some anti-sticky additives tend to remarkably decrease the brightness of the preforms and/or significantly increase haze.

We have discovered that it would be advantageous provide a polyester composition containing one multifunctional additive which not only reduces the bottle coefficient of static friction, but also effectively increases the reheat rate of the preforms used to make the bottle. It would also be highly advantageous to manufacture such a preform and resulting bottle having good brightness and good color.

2. Brief Summary of the Invention

We have discovered a thermoplastic composition having a good reheat rate with improved L* and b* ratings. We have also discovered a thermoplastic composition which has a low coefficient of static friction and a good reheat rate. We have also discovered a thermoplastic composition with a good reheat rate and low sidewall bottle haze.

There is now provided a thermoplastic composition comprising a polyester and glassy carbon.

There is also provided a process for manufacturing a polyester composition, comprising combining glassy carbon with a polyester composition or a composition comprising polyester precursors.

In another embodiment, there is provided a process for manufacturing a polyester composition, comprising adding a solid or liquid concentrate comprising glassy carbon and polyethylene terephthalate to bulk polyethylene terephthalate after melt phase polymerization of the bulk polyethylene terephthalate and before or at injection molding the polyester composition.

In yet another embodiment of the invention, there is provided a process for manufacturing a polyester composition, comprising adding glassy carbon neat or as a concentrate or in a carrier to a melt phase for the manufacture of polyethylene terephthalate.

In a further embodiment, there is provided a concentrate composition comprising glassy carbon in an amount ranging from 0.05 wt.% to about 35 wt.% and a polymer in an amount ranging from at least 65 wt.% up to 99.95 wt.%, each based on the weight of the concentrate composition.

In still a further embodiment of the invention, there is provided a polyester composition having an L* value, and a reheat index which increases between 0.95 and 1.15 with an increasing amount of an additive present in the polyester composition, wherein the slope of a curve representing increasing amounts of said additive plotted against L* measurements on a y axis and the reheat index on an x axis is less than |80|, as measured by at least three data points anywhere between 0.95 and 1.15 with respect to reheat index values using intervals of at least 0.03 units.

In an additional embodiment of the invention, there is provided a polyester preform having a final reheat temperature delta of 5°C or more, an L* rating of 70 or more, and has a b* rating of 3.8 or less.

In still another embodiment of the invention, there is provided a polyester preform having a final reheat temperature delta of 10°C or more and an L* rating of 70 or more.

We have surprisingly discovered an additive that not only improves the reheat rate of polyester compositions, but also operates to reduce the static coefficient of static friction ("COF") of the composition. A further unexpected result observed in the composition of the invention is that the static coefficient of static friction of a bottle can be reduced by incorporating into a polyester composition an additive at typical sticky bottle additive levels (70-150 ppm), while functioning also as a reheat additive, and in addition, maintaining acceptable brightness, sidewall bottle haze and color. It has not been possible to elevate the quantity of conventional reheat additives, such as carbon black or black iron oxide to the typical sticky bottle additive level ranging from 70 to 125 ppm because at such levels the preform and resulting article would have an unacceptably low L* and high haze levels.

Thus, another embodiment of the invention provides for a polyester beverage bottle made from a preform, wherein the preform has a final reheat temperature delta of 5°C or more, a b* rating of less than 3.8, and a bottle made from the preform having a coefficient of static friction of 0.6 or less.

Additionally, the invention provides for a polyester beverage bottle made from a preform, wherein the preform has a final reheat temperature delta of 5°C or more, and an L* value of at least 70, and the bottle has a coefficient of static friction of 0.6 or less.

In yet another embodiment of the invention, there is provided a polyester beverage bottle made from a preform, wherein the preform has reheat index of 1.05 or more and an L* value of 78 or more.

In still a further embodiment of the invention, there is provided a polyester composition having a haze % value, and a reheat index which increases between 0.95 and 1.15 with an increasing amount of an additive present in the polyester composition reheat index, wherein the slope of a curve represented by haze %, as measured on 3 stacked discs each having a thickness of 67 mil for a total thickness of 201 mil, on the y axis in digits from 1% to 40% and the reheat index on the x axis is less than 75, as measured by at least three data points anywhere between 1.00 and 1.15 with respect to reheat index values using intervals of at least 0.03 units, and said polyester composition has a coefficient of static friction of less than 0.8

The invention also includes an embodiment wherein there is provided a polyester composition comprising an additive in an amount ranging from 50 ppm to 150 ppm which functions to increase the reheat rate of the composition by at least 2.5°C for the first 50 ppm of additive and reduces the coefficient of static friction of the composition by at least 20% for the first 50 ppm of additive, each relative to a composition without said additive, wherein the composition has a haze value of less than 9%, and preferably a bottle sidewall haze value of 5% or less.

There is also provided a thermoplastic composition comprising a thermoplastic composition comprising a thermoplastic polymer continuous phase solid at 25°C and 1 atm and an additive reducing a coefficient of static friction of the composition relative to a composition without the additive, wherein said composition has a coefficient of static friction of 0.2 as measured at a point within an additive range of 50 ppm to 250 ppm relative to the weight of the thermoplastic continuous phase.

In each of these embodiments, there is also provided additional embodiments encompassing the processes for the manufacture of each, and the preforms and articles, and in particular bottles, blow molded from the preforms, as well as their compositions containing glassy carbon.

3. Brief Description of the Drawings

Figure 1 is a graph showing the emission spectrum of an ideal black body radiator at 2200 °C.
Figure 2 is a graph showing reheat index vs. L* for various reheat agents contained in a first base polyethylene terephthalate at increasing concentrations.
Figure 3 is a graph showing the reheat index vs. haze for various reheat agents.
Figure 4 is a graph showing the reheat index vs. L* for various reheat agents in first base polyethylene terephthalate.
Figure 5 is a graph showing the additive level vs. reheat temperature of compositions containing various reheat additives.
Figure 6 is a graph showing the additive level vs. coefficient of static friction of compositions containing various reheat additives.
Figure 7 is a graph showing the additive level vs. haze of compositions containing various reheat additives.
Figure 8 is a graph showing the additive level vs. haze of a composition containing SGC2 additive.
Figure 9 is a graph showing the additive level vs. haze of a composition containing SCG3 additive.
Figure 10 is a graph showing the additive level vs. haze and coefficient of static friction of talc as an additive.

4. Detailed Description of the Invention.

The present invention may be understood more readily by reference to the following detailed description of the invention, including the appended figures referred to herein, and the examples provided therein. It is to be understood that this invention is not limited to the specific processes and conditions described, as specific processes and/or process conditions for processing plastic articles as such may, of course, vary. It is also to be understood that the terminology used herein is for the purpose of describing particular embodiments only and is not intended to be limiting.
It must also be noted that, as used in the specification and the appended claims, the singular forms "a," "an" and "the" include plural referents unless the context clearly dictates otherwise. For example, reference to processing a thermoplastic "preform", "article", "container", or "bottle" is intended to include the processing of a plurality of thermoplastic preforms, articles, containers or bottles.
Ranges may be expressed herein as from "about" or "approximately" one particular value and/or to "about" or "approximately" another particular value. When such a range is expressed, another embodiment includes from the one particular value and/or to the other particular value.
By "comprising" or "containing" is meant that at least the named compound, element, particle, etc must be present in the composition or article, but does not exclude the presence of other compounds, materials, particles, etc, even if the other such compounds, material, particles, etc have the same function as what is named.
By " reheat additive" is meant any ingredient or combination of reactive ingredients to produce a compound or element suitable for addition to a polyester or a polyester precursor which has the capability of increasing the final temperature of the composition by at least 3°C within the first 100 ppm of the additive compared to the same composition except without that particular additive present and under identical test conditions, and whether or not the application actually requires reheating the composition.
In one embodiment, there is provided a thermoplastic polymer composition comprising glassy carbon particles distributed within a thermoplastic polymer continuous phase which is solid at 25°C and 1 atm. A thermoplastic polymer is distinguishable from liquid crystal polymers in that thermoplastic polymers have no ordered structure while in the liquid (melt) phase. The thermoplastic composition may optionally be isolated as such.
In this embodiment, at least one of the reheat additives contained in the thermoplastic composition are glassy carbon particles, and more preferably spherical glassy carbon. The meaning of glassy carbon is well known to those of skill in the art of carbon types. It is commonly known as vitreous carbon. Those of skill in carbon types recognize that graphite, carbon black, activated carbon, and glassy carbon are distinct forms of carbon which can be differentiated by one or more of their structure, properties, methods of manufacture, and uses.
Without limiting the meaning of glassy carbon, the following description is provided to illustrate one or more features of commonly produced glassy carbon forms. One or more features can be used to describe glassy carbon, and these include its appearance, properties, structure, method of manufacture, and common use. The most common forms of glassy carbon can be described as black, dense, brittle materials with a high luster and a vitreous or glassy appearance when fractured. Although glassy carbon normally has a low density, its permeability is exceptionally low due to its extremely fine pore structure. Glassy carbon typically has an porosity of less than 0.05%, although some grades can be prepared with porosity as high as 50% through the use of pore-forming agents in the synthesis process. The structure of glassy carbon can be described as a random arrangement of ribbon-like molecules with no long-range order. While the synthetic method for the manufacture of glassy carbon is not limited, common known methods for its production include the formation of a polymeric carbon precursor, such as polyfurfuryl alcohol, phenol-formaldehyde condensation polymer, polyimide and polyacrylonitrile, or even thermoplastic polymers, which are usually cross-linked to varying degrees into a three dimensional structure and then pulverized, followed by the controlled pyrolysis of the carbon precursor in a reducing atmosphere or in an inactive atmosphere, such as a vacuum or in a inert gas (including nitrogen), at a controlled rate to a maximum temperature ranging from 600°C up to about 2800°C, and typically from 1000°C to 2000°C for up to 72 hours, typically 48 hours or less, and once the final temperature is obtained, may be pyrolyzed for only 2 to 5 hours. A common rate of pyrolysis is 10°C/minute, but the rate may be slower at lower temperatures, such as about 2°C/hr up to 600 to 700°C. Also, by varying the time and temperature, the electrical resistivity of the glassy carbon can be adjusted if desired. Any other method for the manufacture of vitreous carbon is also suitable.

One method for producing glassy carbon in the form of spheres included forming an aerosol of the polymer precursor followed by pyrolyzing the aerosol in a thermal reactor. Alternatively, the thermosetting resin polymer may be pulverized by any granulation method, such as a high speed centrifugal mill, spray dried or suspended, and then sintered in a pyrolysis furnace. By first reducing the thermosetting resin to a powder, the pyrolysis time can also be reduced. While the method for forming the spheres is not limited and any method known at the time of inclusion into a polyester is included, any carbon formed by the pyrolysis of a polymeric precursor is a suitable glassy carbon material for use in the invention. Based on its high purity and outstanding chemical resistance, glassy carbon has found use as vessels for chemical and metallurgical processing and as spherical supports for catalysts.

In contrast to glassy carbon which has little or substantially no long-range crystalline order, graphite is composed of a series of stacked parallel planes. As a result, graphite exhibits strong anisotropic properties. While glassy carbon and graphite have high luster, graphite is softer material than glassy carbon. Natural graphite is a mineral form that occurs in nature and synthetic graphite is produced by heating coke or pitch to above 2500 °C. The major uses of natural and synthetic graphite are as lubricants, refractory materials and electrodes.

Carbon black is an amorphous form of carbon which is formed by burning hydrocarbons in insufficient air. Carbon black lacks the luster and vitreous appearance of glassy carbon. The structure of carbon black consists of graphite platelets in parallel stacks which are randomly oriented with respect to each other. Carbon black lacks the three-dimensional crystalline order seen in graphite. It is used primarily to reinforcement of rubber and as a black pigment.

Activated carbon is a material with a more highly developed internal pore structure and larger internal surface area than glassy carbon. Activated carbon is formed from organic materials which are rich in carbon, such as coal, lignite, wood, nut shells, pitches and cokes. It is produced in two-stage process. In the first stage, the organic precursor is carbonized to produce a material with a latent pore structure. In the second stage, the char is burned in superheated steam or carbon dioxide to remove carbon residues blocking the pore entrances. Activated carbons are used as an adsorbent in a variety of purification processes, including wastewater treatment, sweetener discoloration and miscellaneous chemical processing applications.

The shape of the glassy carbon particles used in the invention is not limited, and includes spheres, platelets, needles, cylinders, and irregular shapes such as what is found by crushing the carbon to a powder. The shape of the average glassy carbon particle is preferably spherical. Spherical particles include not only what is commonly understood as a sphere, but also oval shaped particles, star shapes, and any other irregular shaped particles having a substantial three dimensional structure with an aspect ratio of 2 or less as measured along each combination of any two x, y, and z particle axes. Preferably, the average sphere has smooth curved edges. Without being limited to a theory, it is believed that the spherical shape of the glassy carbon particles contributes to the improvement seen in L* brightness and b* color, and further aids in the reduction of the coefficient of static friction by providing a more uniform surface roughening across the bottle finish.

The particles size of the glassy carbon used in the invention is also not particularly limited. However, in selecting the particle size, consideration should be taken to the effect particle size will have on the brightness of the preforms and the haze values. The preferred average particle size of glassy carbon is at least 0.1 micron, preferably at least 0.4 microns, more preferably at least 1 micron, and suitably up to 400 microns or less, preferably 100 microns or less, more preferably 40 microns or less, most preferably 20 microns or less, and even 12 microns or less. Generally, spherical glassy carbon sphere sizes are provided as a composition having a range of particle sizes with an average particle size somewhere within that range. The average particle size is represented by the largest number of particles having a particular size within the range. If desired, the particle size can be measured with a laser diffraction type particle size distribution meter.

The particle size distribution of the glassy carbon particles used in the polyester is not limited. Glassy carbon particles having a narrow or broad particle size distribution can be used. To illustrate, the glassy carbon compositions optionally have a particle size distribution of a 40 micron or less, or a 20 micron or less, or a 10 micron or less, or a 5 micron or less differential between the lowest size point having at least 5% of the particles and the highest size point having at least 5% of the particles. The particles size distribution curve can be mono or polymodal.

It is desirable to use glassy carbon particles which are free of aggregates in order to avoid the formation of visible specks in the polyester. It is also preferable to use that the glassy carbon is free of ash to minimize impact on haze and L*. Further, the particular manufacturing process employed or the shipping conditions may cause some of the spherical particles to fracture and break. When spherical particles are used, it is desirable to use compositions in which 25% or less, more preferably 5% or less of the particles are fractured, broken, or splintered in order to enhance L* at a given rate of reheat and to improve the rate of reheat.

If desired, glassy carbon having the following morphological properties may be employed in the practice of the invention. For example, a useful form of glassy carbon in the thermoplastic composition has a bulk density of 1.40-1.70 g/cm$^3$, a resistivity of 5 x 10$^5$ - 10 x 10$^5$ Ω/cm, a thermal conductivity of 0.01-0.2 cal/cm•sec•°C, and an open porosity of 0%. If desired, however, other forms of glassy carbon outside these ranges are also useful.

The porosity of the glassy carbon is also not particularly limited. However, glassy carbon particles having small surface pore not exceeding 1 micron in largest dimension across the surface of the particles are suitable. Also, glassy carbon compositions having a degree of porosity ranging from 0.0 to 0.03% are also suitable. Nevertheless, glassy carbon particles having surface pores exceeding 1 micron and which are highly porous, in excess of 0.03%, are also suitable as reheat additives in the thermoplastic composition.

A particular advantage of the glassy carbon is that a polyester composition, and in particular polyethylene terephthalate, will exhibit high brightness and have a b* rating below +4 even at large loadings of glassy carbon, thus providing a wide window within which the quantity of glassy carbon can be adjusted to obtain additional improvements in COF and reheat rates. Other black colored reheat additives (graphite, carbon black, black iron oxide) used in polyester compositions for improving the reheat rate of a preform either do not function to reduce COF of blown bottles or if added in quantities typically seen to reduce the COF (e.g. 60 ppm to 150 ppm), the haze level and the L* rating would be so unacceptable as to be visibly dark or black. Thus, the amount of glassy carbon which may be used is not restricted to the low levels of 10 to 30 ppm as in the case of carbon black or graphite.

The amount of glassy carbon used in the polyester will depend upon the particular application, the desired reduction in reheat time, the level of decrease in COF desired, and the toleration level in the reduction of a* and b* away from zero along with the movement of L* brightness values away from 100. In one embodiment, the quantity of glassy carbon is at least 1 ppm, more preferably at least 5 ppm, most preferably at least 50 ppm. In many applications, the quantity of spherical glassy carbon is at least 50 ppm, in some cases at least 60 ppm, and even at least 70 ppm. The maximum amount of spherical glassy carbon is limited only by any one or more of the desired reheat rate, reduction in COF, or maintenance in L*, b* and haze, which may vary among applications or customer requirements. The amount will generally not exceed 500 ppm, and will more typically be below 300 ppm, and in most cases the amount will not exceed 250 ppm. In those applications where color, haze, and brightness are not important features to the application, the amount of glassy carbon used can be up to 5,000 ppm and even up to 10,000 ppm. The amount can exceed 10,000 ppm when formulating a concentrate with glassy carbon as discussed below.

The glassy carbon particles used for incorporating into the continuous phase of a thermoplastic polymer may also be modified glassy carbon particles. Thus, there is also provided a thermoplastic polymer composition comprising 1 ppm to 500 ppm of modified glassy carbon particles within a thermoplastic polymer continuous phase solid at 25°C and 1 atm. The glassy carbon may be modified by appending organic polymeric chains or organic polymeric coatings onto the glassy carbon particles or chemically or physically treating the surface of the particles.

The method by which the glassy carbon particles are incorporated into the polyester composition is not limited. Glassy carbon particles can be added to the polymer reactant system, during or after polymerization, to the polymer melt, or to the molding powder or pellets or molten bulk polyester in the injection-molding machine from which the bottle preforms are made. Glassy carbon may be added to a polyester polymer, preferably polyethylene terephthalate, and fed to an injection molding machine by any method, including feeding the glassy carbon to the molten polymer in the injection molding machine, or combining the glassy carbon with a feed of polyethylene terephthalate to the injection molding machine, either by melt blending or by dry blending pellets. Alternatively, glassy carbon may be added to an esterification reactor, such as with and through the ethylene glycol feed optionally combined with phosphoric acid, a prepolymer reactor, a polycondensation reactor, or to solid pellets in a reactor for solid stating, or at any point in-between these stages. In each of these cases, glassy carbon may be combined with polyethylene terephthalate or its precursors neat, as a concentrate containing polyethylene terephthalate, or diluted with a carrier. The carrier may be reactive to polyethylene terephthalate or non-reactive. The glassy carbon, whether neat or in a concentrate or in a carrier, and the bulk polyester, are preferably dried prior to mixing together. These may be dried in an atmosphere of dried air or other inert gas, such as nitrogen, and if desired, under sub-atmospheric pressure.

In one embodiment, there is provided a concentrate composition comprising glassy carbon in an amount of at least 0.05 wt.%, preferably at least 2 wt.%, and up to about 35 wt.%, preferably up to 20 wt.% and a thermoplastic polymer normally solid at 25°C and 1 atm such as a polyester, polyolefin, or polycarbonate in an amount of at least 65 wt.% and preferably at least 80 wt.% and up to 99 wt.% and preferably up to 98 wt.%, each based on the weight of the concentrate composition. The concentrate may be in liquid or solid form. The converter of polymer to preforms has the flexibility of adding glassy carbon to bulk polyester at the injection molding stage continuously or intermittently, in liquid molten form or as a solid blend, and further custom adjusting the amount of glassy carbon contained in the preform by metering the amount of concentrate to fit the end use application and customer requirement.

The concentrate may be made by mixing glassy carbon with a polymer such as polycarbonate, a polyester, or a polyolefin, in a single or twin-screw extruder and optionally compounding with other reheat additives. A preferred polycarbonate is bisphenol A polycarbonate. Preferred polyolefins are polyethylene and polypropylene. Melt temperatures must be at least as high as the melting point of the polymer. For a polyester such as polyethylene terephthalate, the melt temperatures are typically in the range of 260°-310°C. Preferably, the melt compounding temperature is maintained as low as possible. The extrudate may be withdrawn in any form, such as a strand form, and recovered according to the usual way such as cutting.

Preferably, the concentrate is prepared in a similar polyester as used in the final article. However, in some cases it may be advantageous to use another polymer in the concentrate, such as a polyolefin. In the case where a polyolefin/glassy carbon concentrate is blended with the polyester, the polyolefin is incorporated as a nucleator additive for the bulk polyester.

In one embodiment, the concentrate is added to a bulk polyester or anywhere along the different stages for manufacturing polyethylene terephthalate in a manner such that the concentrate is most compatible with the bulk polyester or its precursors. For example, the point of addition or the ItV of the concentrate may be chosen such that the ItV of the polyethylene terephthalate and the ItV of the concentrate are similar, e.g. +/-0.2 ItV measured at 25°C in a 60/40 wt/wt phenol/tetrachloroethane solution. A concentrate can be made with an ItV ranging from 0.3 to 0.65 to match the typical ItV of a polyethylene terephthalate under manufacture in the polycondensation stage. Alternatively, a concentrate can be made with an ItV similar to that of solid stated pellets used at the injection molding stage (e.g. ItV from 0.6 to 1.1).

Many other ingredients can be added to the concentrate. For example, crystallization aids, impact modifiers, surface lubricants, denesting agents, stabilizers, antioxidants, ultraviolet light absorbing agents, metal deactivators, colorants such as titanium dioxide and carbon black, nucleating agents such as polyethylene and polypropylene, phosphate stabilizers, fillers, and the like, can be included herein. All of these additives and the use thereof are well known in the art.

The thermoplastic polymers in the present composition can be any thermoplastic homopolymer or copolymer but which are solid at 25°C and 1 atm. The thermoplastic polymers form a continuous phase within which is dispersed glassy carbon. By being dispersed "within" the continuous phase is meant that the glassy carbon is contained at least within a portion of a cross-sectional cut of the thermoplastic composition as opposed to being disposed only on a surface as would normally be expected in a coating. Glassy carbon may be disposed on the surface of the thermoplastic polymer so long as particles are found in a region other than the surface of the polymer. The glassy carbon may be distributed within the thermoplastic polymer randomly, dispersed throughout randomly, distributed within discrete regions, or distributed only in a portion of the thermoplastic polymer. Preferably, the glassy carbon is randomly distributed within the thermoplastic continuous phase, and more preferably the distribution is uniform, and most preferably the distribution is additionally throughout the continuous phase of the thermoplastic polymer.

Examples of suitable thermoplastic polymers include polyethylene terephthalate (PET), polyethylene naphthalate (PEN), polycarbonate (PC) and copolyesters of each and blends of each, such as PET and PEN. The thermoplastic polymer used in the present invention most usefully comprises a polyester composition, particularly a partially aromatic polyester, especially a polyester derived, at least mainly, from an aromatic diacid and an aliphatic diol. The preferred polyester is polyethylene terephthalate. As used herein, polyethylene terephthalate means a polymer having ethylene terephthalate units in an amount of at least 60 mole% based on the total moles of units in the polymer. Preferably, the polymer contains ethylene terephthalate units in an amount of at least 85 mole%. Thus, a polyethylene terephthalate polymer may comprise a copolyester of ethylene terephthalate units and other units derived from an alkylene glycol or aryl glycol with a aliphatic or aryl dicarboxylic acid.

For example, polyethylene terephthalate can be manufactured by reacting a diacid or diester component comprising at least 60 mole % terephthalic acid or $C_1$ - $C_4$ dialkylterephthalate, preferably at least 70 mole %, more preferably at least 85 mole %, even more preferably, at least 90 mole %, and for many applications will be at least 95 mole%, and a diol component comprising at least 60 mole % ethylene glycol, preferably at least 70 mole %, more preferably at least 85 mole %, even more preferably at least 90 mole %, and for many applications, will be at least 95 mole%. It is also preferable that the diacid component is terephthalic acid and the diol component is ethylene glycol. The mole percentage for all of the diacid component totals 100 mole %, and the mole percentage for all of the diol component totals 100 mole %.

In one embodiment, the thermoplastic composition comprises a majority of a polyester composition, preferably a polyester composition present in an amount of at least 80 wt.%, more preferably at least 95 wt.%, and most preferably at least 98 wt.%, based on the weight of polymers in the thermoplastic composition forming the continuous phase of the composition (excluding fillers, fibers, impact modifiers, or other polymers which form a discontinuous phase). The polyester composition preferably comprises at least 60 wt.% of a polyethylene terephthalate, more preferably at least 90 wt.% of a polyethylene terephthalate, and most preferably 100 wt.% of a polyethylene terephthalate. As noted above, a polyethylene terephthalate polymer contains at least 60 mole% of ethylene terephthalate units. In this embodiment, it is preferred that the polyethylene terephthalate is made from at least 90 mole% terephthalic acid and at least 90 mole% of ethylene glycol.

Typically, polyesters such as polyethylene terephthalate polymer are made by reacting a glycol with a dicarboxylic acid as the free acid or its dimethyl ester to produce a prepolymer compound which is then polycondensed to produce the polyester. If required, the molecular weight of the polyester can then be increased further by solid state polymerization. After melt and/or solid phase polycondensation the polyesters preferably have an intrinsic viscosity (It. V.) of at least 0.60 dL/g, more preferably at least 0. 70 dL/g measured at 25°C in a 60/40 ratio by weight of phenol/ tetrachloroethane.

In addition to units derived from terephthalic acid, the acid component of the present polyester may be modified with units derived from one or more additional dicarboxylic acids. Such additional dicarboxylic acids include aromatic dicarboxylic acids preferably having 8 to 14 carbon atoms, aliphatic dicarboxylic acids preferably having 4 to 12 carbon atoms, or cycloaliphatic dicarboxylic acids preferably having 8 to 12 carbon atoms. Examples of dicarboxylic acid units useful for modifying the acid component are units from phthalic acid, isophthalic acid, naphthalene-2,6-dicarboxylic acid, cyclohexanedicarboxylic acid, cyclohexanediacetic acid, diphenyl-4,4'-dicarboxylic acid, succinic acid, glutaric acid, adipic acid, azelaic acid, sebacic acid, and the like, with isophthalic acid, naphthalene-2,6-dicarboxylic acid, and cyclohexanedicarboxylic acid being most preferable. It should be understood that use of the corresponding acid anhydrides, esters, and acid chlorides of these acids is included in the term "dicarboxylic acid".

In addition to units derived from ethylene glycol, the diol component of the present polyester may be modified with units from additional diols including cycloaliphatic diols preferably having 6 to 20 carbon atoms and aliphatic diols preferably having 3 to 20 carbon atoms. Examples of such diols include diethylene glycol, triethylene glycol, 1, 4-cyclohexanedimethanol, propane-1,3- diol, butane- 1, 4-diol, pentane-1,5-diol, hexane-1,6-diol, 3- methylpentanediol-(2,4), 2-methylpentanediol-(1,4), 2,2,4-trimethylpentane-diol-(1,3), 2,5- ethylhexanediol-(1,3), 2,2-diethyl propanediol -(1, 3), hexanediol- (1,3), 1,4-di- (hydroxyethoxy) -benzene, 2,2-bis-(4-hydroxycyclohexyl)-propane, 2,4- dihydroxy-1,1,3,3-tetramethyl-cyclobutane, 2,2-bis-(3-hydroxyethoxyphenyl)-propane, and 2,2-bis-(4-hydroxypropoxyphenyl)-propane.

Polyesters can be prepared by conventional polymerization procedures well-known in the art sufficient to effect esterification and polycondensation. Polyester polycondensation processes include direct condensation of dicarboxylic acid with the diol, ester interchange, and solid state polymerization methods. Typical polyesterification catalysts which may be used include titanium alkoxides, dibutyl tin dilaruate, and antimony oxide or antimony triacetate, used separately or in combination, optionally with zinc, manganese, or magnesium acetates or benzoates and/or other such catalyst materials as are well known to those skilled in the art. Phosphorus and cobalt compounds may also optionally be present.

For example, a mixture of one or more dicarboxylic acids, preferably aromatic dicarboxylic acids, or ester forming derivatives thereof, and one or more diols may be heated in the presence of esterification and/or transesterification catalysts in an esterification zone, optionally with a polycondensation catalyst, at temperatures in the range of about 150°C to about 300°C, preferably, about 200°C to about 300°C, and in conventional reactions, typically between about 260°C to about 300°C, and pressures ranging from atmospheric to about 0.2 mm Hg. Normally, the dicarboxylic acid is esterified with the diol(s) at elevated pressure and at a temperature of about 240°C to about 270°C. Polycondensation reactions are initiated and continued in the melt phase in a prepolymerization zone and finished in the melt phase in a finishing zone, after which polycondensation reactions are continued in the solid state in a solid stating zone. In the prepolymerization zone, molecular weight build up is effected by increasing the temperature from about 260°C up to about 280°C and lowering the pressure while excess diol is removed from the mixture. Polycondensation can be continued in a finishing zone in a series of finishing vessels ramped up to higher temperatures until an ItV of about 0.70 or less is achieved. The catalyst material such as antimony oxide or triacetate may be added to the prepolymerization zone along with phosphorus, cobalt compounds, and colorants, which may optionally be added to the finishing zone. In a typical DMT based process, those skilled in the art recognize that other catalyst material and points of adding the catalyst material and other ingredients vary from a typical direct esterification process. Glassy carbon may be added at any stage in the melt phase, including the esterification, prepolymer, and/or the finishing stages, including at any stages before pelletization. After polycondensation is completed in the melt phase, the polyester is pelletized and transferred to a solid state polymerization vessel, optionally through a crystallizer to prevent the pellets from sticking together in the solid stating zone, to continue polycondensation molecular weight build up and produce pellets having the final desired ItV.

Other components can be added to the composition of the present invention to enhance the performance properties of the polyester composition. For example, crystallization aids, impact modifiers, surface lubricants, denesting agents, stabilizers, antioxidants, ultraviolet light absorbing agents, metal deactivators, colorants, nucleating agents, acetaldehyde reducing compounds, other reheat reducing aids, fillers and the like can be included. The resin may also contain small amounts of branching agents such as trifunctional or tetrafunctional comonomers such as trimellitic anhydride, trimethylol propane, pyromellitic dianhydride, pentaerythritol, and other polyester forming polyacids or polyols generally known in the art. All of these additives and many others and their use are well known in the art and do not require extensive discussion. Any of these compounds can be used in the present composition. It is preferable that the present composition be essentially comprised of a blend of thermoplastic polymer and glassy carbon, with only a modifying amount of other ingredients being present.

The polyester composition of the present invention may be used to form bottle preforms, also known as parisons, which are test tube shaped, generally injection molded or thermoformed articles. The amorphous preform is typically heated to about 20°C above the glass transition temperature of the polymer composition by passing the preform through a bank of quartz infrared heating lamps, positioning the preform in a bottle mold, and then blowing pressurized air through the open end of the mold, and in some cases, stretch blow molding the preform.

A variety of articles can be made from the thermoplastic, preferably polyester compositions of the invention. Articles include sheet, film, bottles, trays, other packaging, rods, tubes, lids, and injection molded articles. Any type of bottle can be made from the polyester composition of the invention. In one embodiment, there is provided a beverage bottle made from polyethylene terephthalate suitable for holding water. In another embodiment, there is provided a heat set beverage bottle suitable for holding beverages which are hot filled into the bottle.

Crystallization of the preform finish can be performed either to the preform (as in the Yoshino process), to a pre-bottle (as in the Sidel SRCF process outlined in U.S. Patent No. 5,382,157, or to the actual heat-set bottle. For example, a heat set bottle can be made by placing a preform into a warm or hot mold and stretched into a container. These bottles are typically designed to withstand hot-filling without shrinkage greater than about 1% by volume. It is also desirable, although not required, to achieve a large degree of spherulitic crystallinity in the bottle sidewall in order to resist thermal distortion upon hot- filling of the bottle.

For example, after forming the preform, the preform is transported to a crystallization machine. The preforms are preferably loaded into carriers which shield the bodies of the preforms against exposure to crystallizing heat, but leave the finishes exposed. The carriers, containing the preforms, are passed through the crystallizing machine, where the preform finishes are exposed to infrared energy for a sufficient amount of time to allow the finishes to crystallize. This stage preferably involves exposing at least a portion of the preform finish to radiant heat from lamps in a row of ovens (across a spectrum that may include the IR range) while protecting the body of the preform. The finish is heated to temperatures at which the selected polyester crystallizes rapidly (for PET about 150°C to about 180°C). This results in a highly crystalline finish, i.e., spherulitic crystallinity levels at a minimum of about weight percent. These high levels of crystallinity give dimensional stability to the finish that enable the resulting container to be hot-filled without suffering from thermal distortion in the finish region.

The glassy carbon reheat additives used in the invention impact the reheat rate, brightness, and color of preforms and the haze value and coefficient of static friction of the bottles made from these preforms. Any one or more of these performance characteristics can be adjusted merely by varying the amount of reheat additive used.

The reheat rate is measured according to the test method described in the examples below. Improvements in the reheat rate may not only be expressed in terms of $T_f$, but also in terms of the reheat index by taking the results obtained in the reheat analysis and calculating the reheat index as:

$$RHI = Sample\ \Delta T/Control\ \Delta T;$$

wherein $\Delta T$ is $T_f - T_i$.

As noted from this equation, the reheat index is a convenient value which quickly indicates the performance of a sample against a control.

The impact of any reheat additive, including glassy carbon, on the color of the resin can be judged using the CIE color standard L*, a*, and b* values. The L* value is a measure of brightness, a* value is a measure of redness (+) and greenness (-), and b* value is a measure of yellowness (+) and blueness (-). These values are measured in accordance with ASTM D-2244-93. Color measurement theory and practice are discussed in greater detail in "Principles of Color Technology", pp.25-66 by John Wiley & Sons, New York (1981) by Fred W. Billmeyer, Jr. Brightness is measured as L* in the CIE 1976 opponent-color scale, with 100% representing a perfect white object reflecting 100% at all wavelengths, or a colorless sample transmitting 100% at all wavelengths. An L* of 100 in a colorless sample would be perfectly transparent, while an L* of 0 in a colorless sample would be opaque. Reference is made to the apparent transparency, since L* is calibrated to respond as the human eye would respond. Generally, reheat agents which are dark in the visible spectrum can be added in only very small quantities because of their negative impact on L*. Thus, it was unexpected that large quantities (e.g. greater than 65 ppm) of the glassy carbon particles, which are black to the eye, could be added to a polyester composition while maintaining an acceptable L* brightness in the preform.

L* values for the polyester compositions as measured on bottle preforms discussed herein should generally be greater than 65.0, more preferably at least 70.0, and most preferably at least 75.0 (as measured on a preform sample having a sidewall cross sectional thickness of about 154 mil). Specifying a particular L* brightness does not imply that a preform having a particular sidewall cross-sectional thickness is actually used, but only that in the event the L* is measured, the polyester composition actually used is, for purposes of testing and evaluating the L* of the composition, is injection molded to make a perform having at thickness of 154 mil. The same it true for all test methods which specify a particular wall thickness.

The color of a thermoplastic composition, as measured in preforms having a nominal sidewall cross-sectional thickness of 154 mil, is generally indicated by an a* coordinate value preferably ranging from about minus 2.0 to about plus 1.0, more preferably from about minus 1.5 to about plus 0.5. With respect to a b* coordinate value, it is generally desired to make a bottle preform having a b* value coordinate ranging from -3.0 to positive value of less than +5.0, more preferably less than +4.0, and most preferably less than +3.8, as measured on a sample having a sidewall cross sectional thickness of 154 mil.

Polyesters having an acceptable bottle sidewall haze generally have a haze value, as measured on samples having a cross-sectional thickness of about 12.5 mils, of less than 6.0%, preferably less than 5.0%, more preferably less than 4.0%, most preferably 3.0% or less. It is to be noted, however, that bright preforms (high L* values) blow molded into bottles having a relatively high haze value may nevertheless appear clear to the eye. The haze window can be enlarged if compensated by preforms having high brightness.

Thus, a beneficial feature provided by thermoplastic compositions, preferably polyester composition, containing glassy carbon is that the compositions and tube shaped preforms made from these compositions have an improved reheat rate relative to a control having without a reheat additive. In one embodiment, the final reheat temperature of a polyester composition containing glassy carbon is 112.5°C, preferably 115°C, more preferably 120.0°C, and the polyester composition preferably is 100% polyethylene terephthalate, the polyethylene terephthalate having at least 95 wt.% ethylene terephthalate units.

Independently, a beneficial feature provided by thermoplastic compositions, preferably polyester compositions, containing glassy carbon is that the compositions and tube shaped preforms made from these compositions can be made to have a b* color of less than 4.0, preferably less than 3.8, and more preferably less than 3.7, and in each case preferably greater than -3.0, even at high loadings ranging from 100 ppm to 200 ppm.

Independently, a beneficial feature provided by thermoplastic compositions, preferably polyester compositions, containing glassy carbon is that the L* brightness of compositions and tube shaped preforms made from these compositions is not highly sensitive to glassy carbon loadings, even at higher loadings of glassy carbon (e.g. 100 ppm to 200 ppm). In one embodiment, there is provided thermoplastic, preferably polyester, composition containing glassy carbon, and the preforms and bottles made from these compositions, having an L* of at least 70.0, preferably at least 75.0, more preferably at least 80.0.

Independently, a beneficial feature provided by thermoplastic compositions, preferably polyester compositions, containing glassy carbon is that the coefficient of static friction of bottles made from these compositions is low. In one embodiment, there is provided a thermoplastic composition, preferably a polyester composition, containing glassy carbon, preferably spherical glassy carbon, in the shape of a bottle having a coefficient of static friction 0.60 or less, preferably 0.40 or less, more preferably 0.20 or less. In a more preferred embodiment, the spherical glassy carbon particles have an average particle size anywhere within the range of 0.1 microns to 20 microns.

Independently, a beneficial feature provided by thermoplastic compositions, preferably polyester compositions, containing glassy carbon is that the increase in bottle sidewall percent haze is much less than compositions containing other types of black colored reheat additives at the same levels of reheat additive. In one embodiment, there is provided a thermoplastic composition, preferably a polyester composition, containing glassy carbon having a sidewall bottle haze value measured at a thickness of 12.5 mils (+/- 0.4) of 6.0% or less, preferably 5.0% or less, more preferably 4.0% or less.

There is also now provided thermoplastic compositions, including polyester compositions such as polyethylene terephthalate, and the preforms, sheets, trays, bottles, or other articles made from this composition, having a particular combination of physical properties.

Thus, in one embodiment, there is provided a preform shaped polyester composition having a final reheat temperature delta (as measured by a perform sidewall skin temperature obtained from a Sidel 2/3 SBO, overall power at 84%, zone power settings: Z1=90, Z2=50, Z3=50, Z4=80, Z5=80, Z6=65, Z7=55, Z8=50; lamp setup: Bank 1: lamps 1-8 on; Bank 2: lamps 1, 6,7 on; Bank 3: lamps 1-7 on; Ventilation=70%, preblow cam setting is 28, highblow cam setting is 93, preblow pressure is 10 bar, highblow pressure is 40 bar, rate is 2400 bottles per hour, and a thickness of 154 mils on a 2 liter perform, and measuring final sidewall perform temperature just before entering the mold) of 5.0 °C or more, an L* rating of 70.0 or more, and has a b* rating of less than 3.80. By a final reheat temperature delta is meant the difference between the final reheat temperature of a polyester sample composition and the final reheat temperature of the same composition without any additive or combination of additives which absorb energy to raise the reheat rate of the polyester composition, as measured according to the above test method. There is also provided the polyester compositions having this set of properties and the bottles made from these preforms or made from thermoformed articles, as well as sheet, film packages, rod, tubing, injection molded articles, and any other article made from these polyester compositions. The polyester composition preferably contains glassy carbon as an reheat additive, more preferably spherical glassy carbon.

There is also provided a preform shaped polyester composition having a final reheat temperature of greater than 10.0°C, more preferably 15.0°C or more, and an L* rating 70.0 or more. Not only does the unique combination of the very high rate of reheat and high brightness provide an advantage, but also one has the flexibility of varying the amount of reheat additive within a wide processing window to obtain further improvements in the brightness of the polyester composition. The L* is preferably 75 or more. There is also provided the polyester compositions having this set of properties and the bottles made from these preforms or made from thermoformed articles, as well as sheet, film packages, rod, tubing, injection molded articles, and any other article made from these polyester compositions. The polyester composition preferably contains glassy carbon as an reheat additive, more preferably spherical glassy carbon.

There is also provided a polyester composition, preferably a beverage bottle made from a preform or thermoformed sheet, wherein the preform or sheet has a final reheat temperature delta of 5.0°C or more, a b* rating of 3.8 or less, more preferably 3.7 or less and wherein the bottle has a coefficient of static friction of 0.6 or less, more preferably 0.5 or less, and most preferably 0.4 or less. Optionally, the L* rating in this embodiment is 65 or more, more preferably 70 or more, most preferably 75 or more. There is also provided the polyester compositions having this set of properties and the bottles made from these preforms or made from thermoformed articles, as well as sheet, film packages, rod, tubing, injection molded articles, and any other article made from these polyester compositions. The polyester composition preferably contains glassy carbon as an reheat additive, more preferably spherical glassy carbon.

There is also provided a polyester composition, preferably a polyester beverage bottle made from a preform or thermoformed sheet, wherein the preform has a final reheat temperature of 5.0°C or more, preferably 10°C or more, more preferably 15°C or more, and an L* value of at least 70, more preferably at least 75, and the bottle has a coefficient of static friction of 0.6 or less, more preferably 0.5 or less, and most preferably 0.4 or less. There is also provided the polyester compositions having this set of properties and the bottles made from these preforms or made from thermoformed articles, as well as sheet, film packages, rod, tubing, injection molded articles, and any other article made from these polyester compositions. The polyester composition preferably contains glassy carbon as a reheat additive, more preferably spherical glassy carbon.

In addition, there is provided polyester composition comprising a polyester beverage bottle made from a preform, wherein a molded disc (67 mils thick and 3cm diameter) made from the polyester composition has reheat index of 1.05 or more and an L* value of 78 or more (as measured by stacking 3 of the discs).

In yet another embodiment of the invention, there is provided a polyester composition comprising a reheat additive in an amount ranging from 50 ppm to 150 ppm which increases the reheat rate of the composition by at least 2.5°C for the first 50 ppm of additive and reduces the coefficient of static friction of the composition by at least 20% for the first 50 ppm of additive, each relative to a composition without said additive, wherein the composition has a sidewall bottle haze value of 9% or less measured at a thickness of 12.5 mils, preferably 8% or less, more preferably 5% or less. The reheat additive preferably comprises glassy carbon, more preferably spherical glassy carbon.

There is also now provided a polyester composition suitable for the manufacture of beverage bottles, comprising a reheat additive in an amount of at least 50 ppm, preferably at least 60 ppm, said composition having a bottle sidewall haze value measured by a sidewall bottle test at a thickness of 12.5 mils of less than 8%, preferably 5.5% or less, and wherein said additive is selected such that the haze value of said polyester composition remains at less than 8%, preferably at 5.5% or less, throughout the reheat additive concentration ranging from 50 ppm to 200 ppm. In this embodiment, the reheat additive is preferably spherical glassy carbon, and the polyester comprises polyethylene terephthalate.

There is also provided a polyester composition having an L* value, and a reheat index which increases between 0.95 and 1.15 with an increasing amount of any reheat additive present in the polyester composition, wherein the slope of a curve representing increasing amounts of the additive plotted against L* measurements on a y axis and the reheat index on an x axis is |80| or less, as measured by at least three data points anywhere between 0.95 and 1.15 with respect to reheat index values using intervals of at least 0.03 units. In a more preferred aspect to this embodiment, the polyester composition has an L* of at least 75. The slope of the curve is preferably less than |50|. This embodiment also includes these polyester compositions in the shape of preforms and bottles. The preferred reheat additive is glassy carbon, more preferably spherical glassy carbon, most preferably spherical glassy carbon having an average particle size within the range of 0.1 microns to 40 microns, more preferably between 0.5 to 20 microns.

In another embodiment of the invention, there is provided a polyester composition having a haze % value, and a reheat index which increases between 0.95 and 1.15 with an increasing amount of an reheat additive present in the polyester composition reheat index, wherein the slope of a curve represented by haze % on the y axis in digits from 1% to 40% and the reheat index on the x axis is less than 75, more preferably less than 50, as measured by at least three data points anywhere between 1.00 and 1.15 with respect to reheat index values using intervals of at least 0.03 units, and said polyester composition has a coefficient of static friction of 0.5 or less, preferably 0.4 or less. Haze measurements in this embodiment are determined on 3 molded discs of polymer which were 201 mil total thickness.

To overcome the problem of bottles tending to stick together, bottle manufacturers use a water spray on the bottles to provide a degree of lubricity. While solutions in the past have provided a measure of success in reducing the coefficient of static friction between bottles, the reduction has not been sufficiently large to provide a complete solution by dispensing with the water spray. It is believed a coefficient of static friction of 0.20 or less will provide the approximate equivalent benefit provided by a water spray. There is now provided a thermoplastic composition, and preferably a polyethylene terephthalate bottle, containing an additive reducing the coefficient of static friction of the composition relative to a composition without the additive, wherein the thermoplastic composition has a coefficient of static friction of 0.2 as measured at a point within an additive range of 50 ppm to 250 ppm relative to the weight of the thermoplastic continuous phase. Preferably, the thermoplastic composition comprises an additive in an amount ranging from 50 ppm to 250 ppm relative to the weight of the thermoplastic continuous phase. There is also provided the polyester compositions having this set of properties and the bottles made from these preforms or made from thermoformed articles, as well as sheet, film packages, rod, tubing, injection molded articles, and any other article made from these polyester compositions. The polyester composition preferably contains glassy carbon as a reheat additive, more preferably spherical glassy carbon.

In each of the above embodiments, the polyester compositions preferably comprise a reheat additive, more preferably glassy carbon, most preferably spherical glassy carbon.

The present invention is illustrated by the examples below. However, the examples should not be interpreted as a limitation on the present invention.

Examples

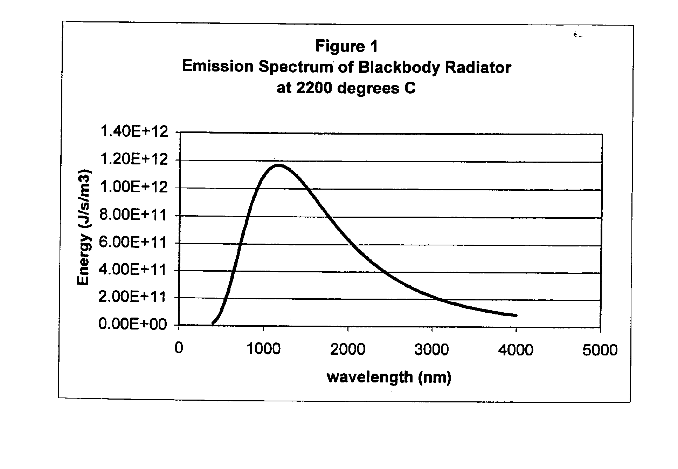

Reheat rate measurements were made according to the following test methods. The polymer samples were injection molded into discs 3 cm diameter with a thickness of 67 mils or into 3" by 3" plaques with a thickness of 150 mils. The discs or plaques were set aside for 24 hours to equilibrate to ambient temperature. Both the control discs/plaques and a set of three sample discs/plaques at each level of reheat additive were each treated as follows. The disc/plaque was placed onto a support contacting the molded item only along its edges. An actuator then automatically moved the disc/plaque beneath a pyrometer and measured the initial temperature ($T_i$). The disc/plaque was then moved to a fixed distance below a lamp equipped with a bulb (GE DYH projection bulb, 250-W, 120-V) operating at 60V and was exposed to radiant light for 30 seconds in the case of plaques or 20 seconds in the case of discs. The color temperature of the lamp was approximately 2200 °C. The emission spectrum of an ideal black body radiator at 2200 °C is shown in Figure 1 below. After heating, the plaque/disc was automatically returned to the pyrometer where the surface temperature of the center area of the side which faced the lamp (front side) was recorded two seconds after the lamp was turned off ($T_f$). A 90-second cooling cycle was used between consecutive tests, during which a fan cooled the lamp housing prior to loading the next sample. The reheat index of the sample was calculated by the following equation:

$$\text{Reheat Index} = (T_f - T_i)_{sample} / (T_f - T_i)_{control}$$

where the control material used in the examples was Base PET2 commercially available from Eastman Chemical Company and tested in the exact same manner as the sample discs/plaques.

The measurements of L*, a* and b* were conducted according to the following method. Color was measured either on molded discs (3 cm diameter with a thickness of 67 mils), molded plaques (3" by 3" with a thickness of 150 mils), or on molded preforms. The preform style utilized was a standard 2-liter bottle injection molded preform consisting of a cylinder of approximately 6" in length, by 1.25" in diameter, having a single-wall thickness of 154 mils, and a weight of 54 grams. The preform included a collar and screw neck at the open end.

In the case of discs, a HunterLabUltraScan spectrocolorimeter was used to measure L*, a* and b* on three discs stacked together (approximately 200-mil thickness). The instrument was operated using a D65 illuminant light source with a 10° observation angle and integrating sphere geometry. The color measurements were made in the total transmission (TTRAN) mode, in which both light transmitted directly through the sample and the light that is diffusely scattered is measured. Three chips were stacked together using a special holder in front of the light source, with the area of largest surface area placed perpendicular to the light source.

In the case of plaques, a HunterLab UltraScan XE diffuse/8° spectrophotometer standardized in total transmittance (TTRAN) mode was used to measure the L*, a* and b* color coordinates. The light source was a D65 illuminant and the observation angle was 10°. Two of the 3" x 3" x 1/8" plaques were placed together and presented to the light source using a custom sample holder. The plaque was presented with the plane formed by the 3" x 3" side perpendicular to the light source.

In the case of preforms, a HunterLab UltraScan XE diffuse/8° spectrophotometer standardized in regular transmittance (RTRAN) mode was used to measure the L*, a* and b* color coordinates. The regular transmittance mode measures light that passes directly through the sample. The light source was a D65 illuminant and the observation angle was 10°. The preform was placed on a special holder base directly in front of the lens for the measurement.

Haze was measured both on molded discs and bottle sidewall specimens. In the case of molded discs, a HunterLabUltraScan spectrocolorimeter was used to measure haze. Three discs were stacked together directly in front of the light source, with the largest surface area placed perpendicular to the light source. The instrument was operated in the TTRAN mode, using a D65 illuminant and a 10° observer. A transmission haze measurement is a ratio of the diffuse light to the total light transmitted by a specimen. Haze is calculated as follows:

$$\text{Haze} = (Y_{\text{diffuse transmission}} / Y_{\text{total transmission}}) * 100.$$

The measurement of bottle sidewall haze was conducted according to the following method. Haze measurements were made in accordance with ASTM D-1003-00 on the 4" x 4" sections of the bottle sidewalls using a Hazegard Plus Model 4725 with illuminant C, using ASTM D1003, Method A. The cross-sectional thickness of the bottle sidewall was 12.5 mils. The same resin formulation used for the manufacture of bottles subjected to destructive haze testing and the bottles subjected to coefficient of static friction tests was also used for the manufacture of preforms subjected to testing for L*, a* and b* color tests.

The measurement for coefficient of static friction was determined according to the following test method. This test method provides a speed and torque-sensing device capable of measuring the frictional characteristics of plastic bottles or surfaces with cylindrical or complex shapes. Coefficient of static friction was measured by mounting 2 liter bottles perpendicular and in contact with each other across the bottle centers and rolling one bottle against a static bottle. Each of the mounted bottles was tested within 1 hour of blowing and releasing from the mold. A first rotatable bottle to be tested is screwed into screw cap that is attached to a motor shaft. A second bottle is screwed into screw cap that is hinged and connected to a post. The second hinged bottle is allowed to contact the top sidewall of the first bottle at a perpendicular 90° angle to the first rotatable bottle. A cord to which is attached a 500 gram weight is hung around the end of the second hinged bottle distal to the pivot point to which the bottle is attached to the post. A computer command is entered to activate rolling rotation of the first rotatable bottle attached to the motor shaft from a standstill to the fixed speed of 10 rpm. The computer records the output voltage from a torque-sensing motor, such as Model No. 1602-100, Lebow Products Inc., as the motor power is increased in order to reach and maintain a constant speed (10 rpm). This output voltage is proportional to the torque experienced by the bottle as it is rotated at a constant speed, while in contact with the like. In this mode, a tachogenerator that is associated with the torque-sensing motor automatically adjusts the torque in order to maintain a constant speed as bottles are in contact and set in motion from a standstill. The static coefficient of friction is calculated by a computer program using the formula $\mu = (\text{Torque}/R)/F_2$, where Torque is the output of the torque-sensing device, R is the bottle radius, and $F_2 = F_1(L_1/L_2)$. Here $F_2$ is the load experienced by bottles at their contact point, $F_1$ is the load or weight applied to the hinged bottle (500 g), $L_1$ is the distance from the hinged bottle pivot point to the point where the weight is applied (12.25 inches) and $L_2$ is the distance from the bottle pivot point and the contact point between the bottles (6.25 inches).

Base PET1 is a polyethylene terephthalate polymer commercially available from Eastman Chemical Company as Heatwave® Polymer CF746 having an intrinsic viscosity of 0.87 +/- 0.02.

Base PET2 is a polyethylene terephthalate polymer commercially available from Eastman Chemical Company as 9921 W. This product has an intrinsic viscosity of approximately 0.80 +/- 0.02.

Base PET3 is a polyethylene terephthalate polymer commercially available from Eastman Chemical Company as CB12 having enhance reheat properties and an intrinsic viscosity of 0.84 +/- 0.02.

Base PET4 is polyethylene terephthalate polymer 9921 commercially available from Eastman Chemical Company having an intrinsic viscosity of 0.80 +/- 0.02 .

SGC is the generic designation for spherical glassy carbon of any particle size.

SGC1 is spherical glassy carbon having particle size ranging from 0.4 to 12 microns, commercially available from Alfa Aesar.

SGC2 is spherical glassy carbon having a particle size ranging from 2 to 12 microns, commercially available from Aldrich Chemical Company.

SGC3 is spherical glassy carbon having a particle size ranging from 10 to 40 microns, commercially available from Aldrich Chemical Company.

BIO is black iron oxide having an average particle size of about 1 micron, commercially available from Ferro Corporation.

CB is carbon black Special Black 4 obtained from DeGussa Corporation.

GR is synthetic graphite powder (1 - 2 micron particle size) available from Aldrich Chemical Company.

RA is reduced antimony formed by the in-situ addition of a phosphorous acid reducing agent to a polyethylene terephthalate containing antimony trioxide.

Example 1

In this example, SGC2 reheat additive is compared to a BIO control. The reheat additives were combined with Base PET4 by the following method in the amounts shown in Table 1. Prior to any mixing the Base PET4 pellets were ground to a powder and dried at 150° C for 8 hours in a Conair® dehumidifying dryer. Each subsequent sample was prepared by dry blending the powder of Base PET4 with the appropriate level of reheat additive followed by hand mixing in a polyethylene bag. The mixture was then added to the feed hopper of a twin screw extruder, fitted with a set of high shear mixing screws. The extruder's vent was plugged and nitrogen was continuously fed to the feed hopper and extruder throat to exclude air. The extruder was operated at a screw speed of 200 rpm and a temperature of approximately 282° C. Under these conditions the polymer residence time in the extruder's barrel was approximately three minutes. The extrudate was quenched in an ice water bath and cut into small cylindrical pellets. The resulting amorphous pelletized material was dried and crystallized for 45 minutes at 175° C. The final crystalline product was further dried at 170° for 8 hours before being injection molded into 3"x 3" x 1/8" plaques for color, haze and reheat testing.

The reheat rate and brightness (L*) of the plaques was measured using the procedures noted above. The reheat index and L* for each set of plaques is reported in Table 1.

Table 1

| Plaque Sample | Amount of additive (ppm) | Reheat Index (of plaque) | L* color (on double plaques) |
|---|---|---|---|
| Base PET4 | 0 | 0.97 | 83.0 |
| w/ SCG2 | 80 | 1.06 | 77.0 |
| w/ BIO | 21 | 1.07 | 69.3 |

As seen from the data in Table 1, the SCG2 additive effectively increased the reheat rate as shown by the higher reheat index of samples containing SGC2 relative to Base PET4 without any additive. Moreover, the results show that polymer containing SGC2 is brighter (i.e. higher L*) than polymer of the same reheat index containing BIO. The polyethylene terephthalate polymer containing SGC2 is brighter than the polyethylene terephthalate polymer containing BIO even though the amount of SGC2 in the polymer is almost four times as high as the polymer containing BIO. This result is particularly surprising because, absent other factors, one would expect that a polymer containing a high concentration of reheat additive or elemental material would not be as bright as a polymer containing less reheat additive or elements.

Example 2

The purpose of this example is to compare SGC2 and SGC3 reheat additives to BIO and CB reheat additives. Blends of these additives in Base PET2 were prepared in the following manner. Each additive was dry blended in a glass bottle with Base PET2 that had been cryogenically ground to a particle size that was small enough to pass through a sieve with 3-mm diameter circular holes. The reheat additive loading in this concentrate mixture was 0.2 weight percent. The mixture was dried at 110° C overnight in a vacuum oven at a pressure of less than thirty inches of water. The dry mixture was melt blended in a DACA® MicroCompounder/MicroInjector, using a screw temperature of 290° C and a screw speed of 120 rpm. The mixture was circulated in the instrument for two minutes and then extruded. The resulting extrudate was cryogenically ground in a Wiley mill to produce a powder small enough to pass a screen with 3-mm diameter holes. This final melt concentrate was then dry blended with additional Base PET2 in a series of glass jars to produce the desired concentration of reheat additive in the final polymer set. Typically these final concentrations ranged from 5 to 200 ppm of the reheat additive in the Base PET2. The final mixtures were dried overnight at 110° C before the final preparation of discs.

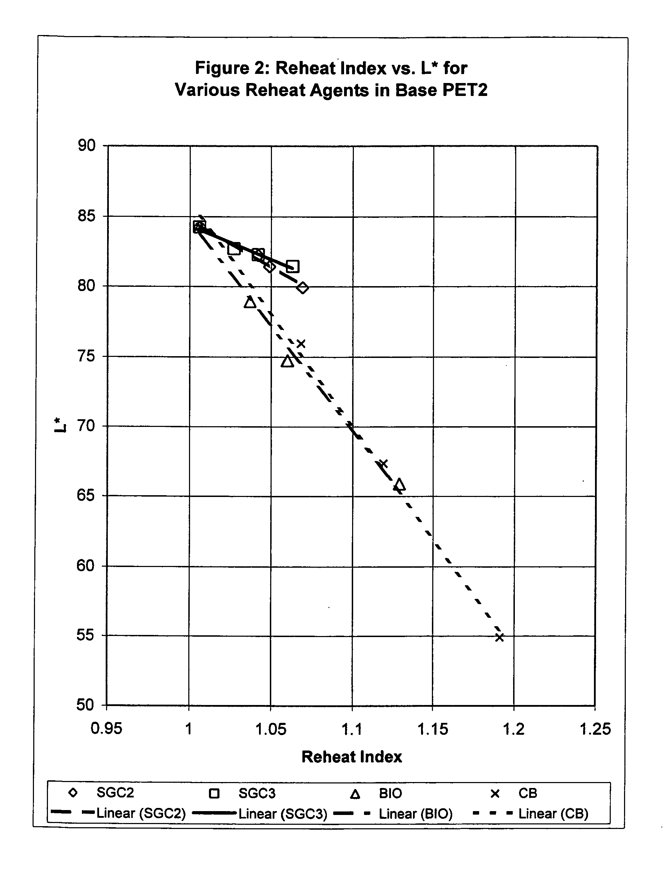

A series of three, 3-cm diameter, 67 mil thick clear discs were prepared from each of the final mixtures described above. Disc preparation was done by extruding each mixture at a temperature of 290° C and 120 rpm screw speed into the instrument's micro-injector barrel. The barrel was purged with material before attempting to mold any discs. The final discs were prepared using an injector pressure between 80 and 120 psi to the injection piston. The disc mold was maintained at a temperature range of 10-25° C by circulation of chilled water. Reheat, color and haze were evaluated according to the methods described above for discs. The results of the testing are shown in Table 2 and Figure 2.

Table 2:

| Results of Disc Preparation | | | | |
|---|---|---|---|---|
| Disc Sample | Amount of Additive (ppm) | Reheat Index (on disc) | L* (on 3 discs stacked) | Haze (on 3 discs stacked) |
| Base PET2 (blank) | 0 | 1.00 | 84.27 | 8.9 |
| w/ SGC2 | 10 | 1.042 | 82.23 | 7.1 |
| w/ SGC2 | 20 | 1.048 | 81.43 | 7.6 |
| w/ SGC2 | 60 | 1.068 | 79.92 | 9.0 |
| w/ SGC3 | 10 | 1.042 | 82.29 | 7.2 |
| w/ SGC3 | 20 | 1.026 | 82.72 | 6.7 |
| w/ SGC3 | 60 | 1.063 | 81.45 | 7.5 |
| w/ BIO | 15 | 1.037 | 78.94 | 12.3 |
| w/ BIO | 30 | 1.060 | 74.74 | 21.1 |
| w/ BIO | 60 | 1.129 | 65.90 | 31.1 |
| w/ CB | 5 | 1.068 | 75.95 | 6.6 |
| w/ CB | 10 | 1.119 | 67.35 | 7.0 |
| w/ CB | 20 | 1.191 | 54.9 | 7.6 |

The results indicate that the reheat rate of SGC-containing discs was better than discs of the blank Base PET2 resin which contained no added reheat agent. The results also indicate that at a given reheat index, the L* of discs containing SGC2 and SGC3 were superior to the L* of discs containing BIO or CB. This is also graphically shown in Figure 2.

Figure 2 illustrates the relationship between reheat index and disc L*. As the reheat index increases, the disc brightness decreases (i.e. a negative slope). Therefore, due to this relationship, an increase in reheat index (a desirable property of a resin) also results in an undesirable property in the resin, namely, a decrease in brightness. However, as noticed from Figure 2, not all of the polymer formulations have the same slope of the reheat index/L* plot. The slope of a curve representing SGC as the reheat additive is not as steep as the slope of a curve represented by the same base polymer containing BIO or CB. The L* of base polymers containing BIO or CB drops at a significantly higher rate than compared to the same base polymer containing SGC. Thus, the formulations of the invention have superior brightness at the same level of reheat performance compared to known reheat additives, such as CB and BIO.

The slope of the curve represented by SGC 2 was calculated to be about -70, and the slope of the curve represented by SGC3 was calculated to be about -30, while the slopes for CB and BIO were calculated in excess of about -100. The results shown in Figure 2 indicate that it is now possible to obtain a polyester composition having an L* value, and a reheat index which increases between 0.95 and 1.15 with an increasing amount of any reheat additive present in the polyester composition, wherein the slope of a curve representing increasing amounts of the reheat additive plotted against L* measurements on a y axis and the reheat index on an x axis is |80| or less, preferably |75| or less, more preferably |50| or less, as measured by at least three data points anywhere between 0.95 and 1.15 with respect to reheat index values using intervals of at least 0.03 units.

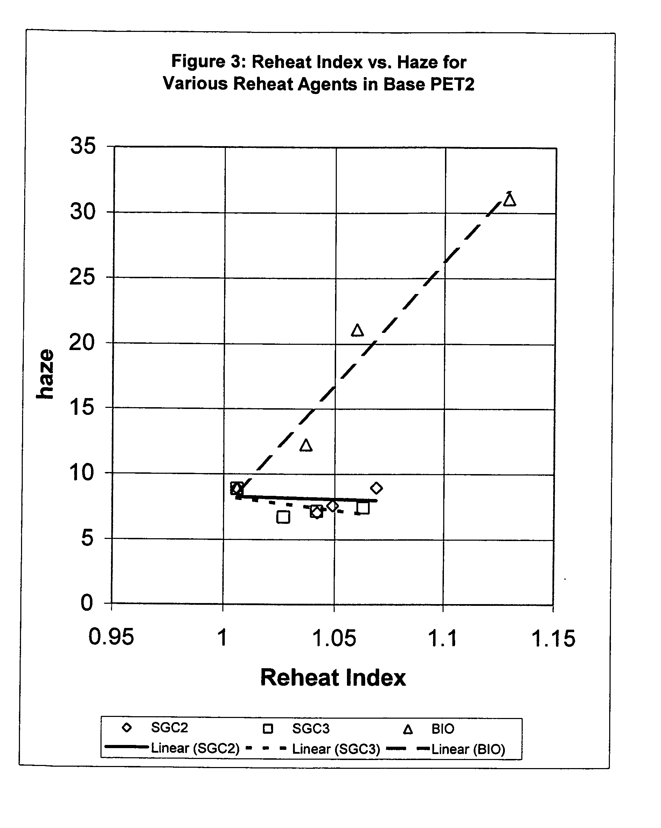

Figure 3 graphically illustrates the improvement in haze for Base PET2 polymers containing SGC2 and SGC3 compared to Base PET2 polymers containing BIO. As the reheat index increases, the haziness of the disc also increases considerably when BIO is used as the reheat additive. However, there is no large increase in haze of discs containing SGC as reheat additive. Thus, bottles made with polyethylene terephthalate polymers formulated with SGC as the additive are brighter and less hazy than those formulated with BIO at similar or equivalent reheat index values.

Table 3 also demonstrates that it is now possible to manufacture a polyester preform having a reheat index of 1.05 or more, preferably 1.060 or more, and an L* value of 78 or more as shown by several of the examples containing SGC 2 and SCG3.

Example 3

Lab-scale polymer preparations were made to evaluate the impact of prolonged exposure of the SGC additive to typical PET manufacturing conditions of temperature and pressure. The general synthetic procedure is described below for the preparation of a Base PET5. This example also demonstrates the addition of the reheat additive to a polyethylene terephthalate process in the melt phase at the prepolymer stage of manufacture before polycondensation in a finishing stage. Polymers prepared via this route were used to prepare discs for evaluation of color, reheat and haze values. The reheat additives evaluated in this manner were: SGC1 (0 - 150 ppm), SGC2 (0 - 200 ppm), CB (0 - 10 ppm), GR(0 - 150 ppm) and RA. RA was formed in-situ by the addition of phosphorous acid reducing agent.

A typical charge of reactant to a 5-L three-necked round bottom flask is shown in the table below.

| Reactant | Amount (grams) |
|---|---|
| Dimethyl terephthalate | 1941.9 |
| Ethylene glycol | 1230.23 |
| 1,4-Cyclohexanedimethanol | 25.96 |
| Manganese acetate (tetrahydrate) | 0.475 |
| Antimony trioxide | 0.522 |
| Titanium isopropoxide | 0.2757 |

The reaction mixture was heated and stirred and methanol was removed via a packed column. The temperature of the reaction mixture was allowed to increase until the mass of methanol removed was approximately the level expected for 100 % conversion of the DMT charged. Once the reaction was deemed to be complete, the heating source was removed and the mixture was allowed to cool to a temperature below the boiling point of EG, at which time the mixture was poured into a stainless steel pan and allowed to cool and solidify.

One hundred and thirty-two grams of the reaction product was charged to each of several 500 ml round-bottom flasks. Each flask was then fitted with a condensate take-off head that had provision for the insertion of the shaft of a stainless steel stirring apparatus. The head also included a hose connection to permit the introduction of nitrogen gas. A nitrogen purge was initiated and the flask was immersed into a molten metal bath which served as the source of heat for the reaction. The metal bath was preheated to a temperature of 225° C prior to insertion of the reaction flask. Polymerization was accomplished according to the reaction profile shown below. The appropriate reheat agent was added at stage 3 at the amounts give in Table 3. The reheat agent was typically added as a slurry in ethylene glycol. An appropriate amount of phosphorus, as phosphoric acid in ethylene glycol, was also added at stage 3. Generally the reheat agent was added separately from the phosphorus but this is not required. The reaction continued according to the set-points shown in the table. Using this procedure and catalyst system, a product intrinsic viscosity of 0.71 was typically obtained.

| Stage | Time (minutes) | Temperature set-point(° C) | Pressure (mm Hg) | Stirring rate (shaft rpm) |
|---|---|---|---|---|
| 1 | 0.1 | 275 | ATM | 0 |
| 2 | 10 | 275 | ATM | 100 |
| 3 | 2 | 275 | 165 | 100 |
| 4 | 5 | 275 | 165 | 100 |
| 5 | 30 | 275 | 165 | 100 |
| 6 | 10 | 292 | 3.8 | 100 |
| 7 | 35 | 292 | 3.8 | 100 |
| 8 | 3 | 298 | 0.8 | 100 |
| 9 | 22 | 298 | 0.8 | 100 |
| 10 | 1 | 298 | 150 | 0 |

Once the reaction was complete the reaction flask was removed from the molten metal bath and the polymer was allowed to cool. Upon cooling the polymer crystallized. This final crystalline polymer product was ground in a Wiley mill to produce a powder small enough to pass through the mill's screen which has 3-mm diameter holes. The polymer was used to prepare the discs on the DACA extruder as in Example 2 above. Various properties including L* color, haze and reheat index were then measured on the discs.

Table 3

| Disc Sample | Amount of Additive (ppm) | Reheat Index | L* (on 3 discs stacked) | Haze (on 3 discs stacked) |
|---|---|---|---|---|
| Base PET5 | 0 | 0.987 | 84.11 | 4.8 |
| w/ SGC1 | 75 | 1.121 | 75.65 | 17.5 |
| w/ SGC1 | 150 | 1.268 | 66.29 | 29.3 |
| w/ SGC1 | 300 | 1.483 | 49.39 | 48.2 |
| w/ SGC2 | 25 | 1.023 | 80.75 | 5.8 |
| w/ SGC2 | 50 | 1.036 | 83.29 | 5.3 |
| w/ SGC2 | 100 | 1.059 | 80.40 | 7.8 |
| w/ SGC2 | 175 | 1.114 | 76.60 | 9.9 |
| w/ SGC2 | 200 | 1.128 | 74.83 | 12.7 |
| w/ BIO | 11 | 1.041 | 79.94 | 9.7 |
| w/ BIO | 28 | 1.066 | 78.12 | 14.3 |
| w/ BIO | 32 | 1.086 | 75.40 | 18.0 |
| w/ CB | 2.5 | 1.000 | 81.38 | 3.8 |
| w/ CB | 5 | 1.048 | 73.53 | 4.5 |
| w/ CB | 10 | 1.089 | 67.39 | 6.7 |
| w/ GR | 8 | 1.002 | 83.72 | 6.4 |
| w/ GR | 32 | 1.075 | 76.01 | 9.9 |
| w/ GR | 50 | 1.091 | 75.49 | 11.5 |
| w/ GR | 100 | 1.234 | 62.21 | 22.1 |
| w/ GR | 150 | 1.356 | 50.27 | 30.9 |
| w/ RA | na | 1.013 | 75.79 | 6.2 |
| w/ RA | na | 1.061 | 70.60 | 7.9 |

The data in Table 3 show that both SGC1 and SGC2 are effective reheat agents in Base PET5, as indicated by the higher reheat index compared to base resin. The results also indicate that the L* of discs prepared with SGC 1 and SGC2 are superior to the L* of discs prepared with BIO, CB, RA and GR reheat agents at the same or similar reheat index. At any given reheat index, the L* of discs containing SGC is significantly higher than BIO, CB, RA and GR.

The results in Table 3 also demonstrate that the haze is less for SGC containing discs than for BIO containing discs at a similar reheat index. The results in Table 3 demonstrates that polyethylene terephthalate bottles containing glassy carbon can have disc haze values, when measured at a thickness of 201 mils of 8.0% or less, preferably 6.0% or less.

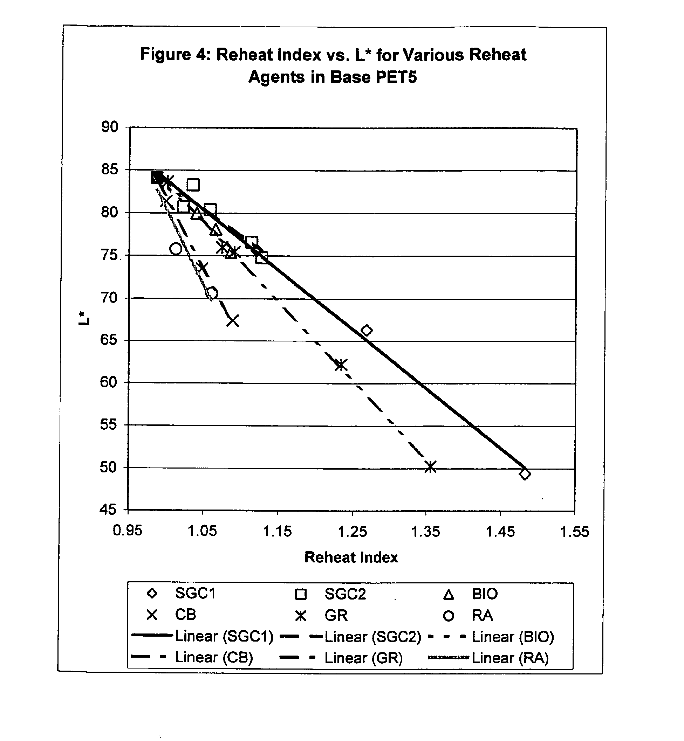

Figure 4 graphically illustrates that the L* of samples made with glassy carbon SGC1 and SGC2 in Base PET5 did not decrease as sharply as the L* of samples made with other common reheat agents, such as carbon black, BIO, and GR. At any given reheat index, the L* for samples made with SGC1 and SGC2 was higher relative to those made with carbon black, BIO and GR.

Example 4

SGC2 and SGC3 additives were evaluated by manufacturing polymer in a batch pilot plant scale facility, injection molding bottle preforms and finally blowing 2-liter sized bottles. The following procedures were used to manufacture the concentrates, injection mold the preforms and blown finished bottles.

Sixty pounds of 1 weight percent concentrate of SGC2 and SGC3 in a Base PET6 was prepared by reacting dimethyl terephthalate (DMT), ethylene glycol (EG) and dimethyl isophthalate (DMI) in an eighteen gallon stirred pot reactor system. DMT, DMI, EG, 55 ppm manganese (as the acetate), 20 ppm titanium (as the isopropoxide), and the SCG reheat agent were charged to the reactor system. The temperature of the reactors contents was then raised to effect reaction of the DMT, DMI and EG. Methanol was removed from the reactor as a by-product. Once the theoretical volume of methanol had been removed the reactor's temperature set-point was increased from 200° to 220° C. Once the 220° set point was reached, 80 ppm cobalt (as the acetate), 110 ppm phosphorus (as a phosphate ester) and 220 ppm antimony (as the oxide) were charged to the reaction mixture. The reactor's set-point was then increased from 220° to 285° C. The pressure in the reactor was reduced from atmospheric to 1 mm Hg over the course of the heat-up period. Once the amperage drain on the agitator motor indicated that the molten polyester had reached the desired viscosity the reactor's contents were extruded via a gear pump into a chilled water trough. The resulting strand of polyester was chopped into cylindrical pellets. The pellets were dried and crystallized prior to being solid state polymerized in a static bed solid stating unit. Solid state polymerization was carried out at 215° C and with a constant flow of dry nitrogen passing through the pellet bed. Under these conditions the polymer produced in the melt phase reactor required approximately 12 hours to reach the target intrinsic viscosity of 0.81.

The product polyester synthesized via the above described processes was then blended with Base PET2 so as to produce approximately thirty pounds of mixture with the SGC concentrations shown in the attached table. The blends were then used to prepare 2-liter bottle preforms. Preform preparation was done using a Husky model XL-160 with an eight cavity mold. Fifty preforms were randomly selected from the center cut of the produced preforms for blowing into bottles. Preforms produced before and after each set of fifty were discarded to prevent contamination by subsequent blends.

Bottle blowing was done using a Sidel model SB02/3 blow molding unit. A preliminary experiment was conducted in order to evaluate the relative reheat rates of the base PET2 to those containing the SGC additives and to a commercially available reheat resin, CB12 (Base PET3). The power output to the quartz heaters was set at 84%. A series of three preforms of each resin formulation was passed in front of the quartz heaters and the preform skin temperature was measured. The higher the preform skin temperature, the higher the reheat index of the resin. Based on the results of this preliminary reheat experiment, power outputs were selected for each resin such that a constant preform skin temperature of about 110 °C could be obtained in the bottle-making process. For example, a lower oven power was required to achieve a preform skin temperature of 110 °C for the SGC resin formulations with high reheat index. A higher oven power was required for the Base PET2 resin without reheat additive. Blowing the bottles at a consistent preform skin temperature minimizes differences in bottle properties which would be caused by blowing at different temperatures.

Eleven preforms of each formulation were heated at the selected oven power and blown into bottles for subsequent bottle coefficient of static friction and bottle sidewall haze testing. Color and sidewall haze were measured on sections of the bottle cut from the central panel; i.e. below the tapered neck section and the feet of the typical 2-liter PET beverage bottle. Each cylindrical section of the bottles' main side panes was then cut into two sections along the mold line to produce two convex wall sections from each of the eleven bottles. The procedures for measuring haze and color were described previously.

Table 4

| Reference | Preform Temperature (deg C) | | | | COF | | | | | Preform Color | | | Bottle Sidewall Haze % (12.5 mils) |
|---|---|---|---|---|---|---|---|---|---|---|---|---|---|
| | # 1 | #2 | #3 | Average | 1 | 2 | 3 | 4 | Average | L* | a* | b* | |
| **Base PET2 blank** | 109.2 | 110 | 110.3 | **109.8** | 1.183 | 1.039 | 1.144 | 1.085 | **1.113** | 84.82 | -1.01 | 3.69 | 0.93 |
| Base PET2 w/ 50 ppm SGC3 | 112.2 | 113.1 | 112.8 | **112.7** | 0.365 | 0.541 | 0.406 | 0.636 | **0.487** | 83.21 | -0.97 | 3.69 | 1.83 |
| Base PET2 w/ 100 ppm SGC3 | 113.9 | 113.3 | 113.2 | **113.5** | 0.329 | 0.156 | 0.186 | 0.206 | **0.219** | 81.90 | -0.99 | 3.74 | 1.66 |
| Base PET2 w/ 200 ppm SGC3 | 117 | 117.6 | 117.3 | **117.3** | 0.112 | 0.118 | 0.118 | 0.137 | **0.121** | 80.02 | -1.01 | 3.76 | 2.05 |
| Base PET2 w/ 50 ppm SGC2 | 115.4 | 115.7 | 116.2 | **115.8** | 0.38 | 0.261 | 0.209 | 0.203 | **0.263** | 81.19 | -1.05 | 3.56 | 1.75 |
| Base PET2 w/ 100 ppm SGC2 | 121 | 121.2 | 120.5 | **120.9** | 0.132 | 0.142 | 0.126 | 0.152 | **0.138** | 77.30 | -1.08 | 3.32 | 3.41 |
| Base PET2 w/ 200 ppm SGC2 | 129.2 | 128 | 129.1 | **128.8** | 0.134 | 0.139 | 0.129 | 0.121 | **0.131** | 71.01 | -1.10 | 2.93 | 4.87 |
| Base PET3 (commercial CB12 reheat resin) | 127.2 | | | **127.2** | | | | | | 68.54 | -0.91 | 4.05 | |

The results set forth in Table 4 indicate that one can make a preforms with glassy carbon which is brighter (i. e. higher L*) than a preform made a commercial enhanced reheat resin Eastman CB12. (Compare Base PET2 w/200 ppm SGC2 with Base PET3). Moreover, the results show that the resistance of bottles toward sticking together is much better with bottles made from polymers containing glass carbon compared to bottles made from polymers of Base PET2 and Base PET3. Thus, preforms made from polymers containing SGC have improved reheat rates compared to a control with no reheat additive (Base PET2), have substantially equivalent or better reheat rates than many commonly used reheat additives, such as that used in Base PET3, and at substantially equivalent reheat rates, have superior brightness (L*). Additionally, the SGC simultaneously functions as a sticky bottle additive, while most other reheat additives lack this function or exhibit this function to only an insignificant amount. To function as an effective anti-sticky bottle additive, the amount of additive used is fairly substantial, e.g. in excess of 60 ppm. At these levels, commonly known reheat rate additives such as CB, RA and BIO would darken the preform and bottle, rendering unacceptably high haze values and extremely low L* values. While the these additives are not known to function as an anti-sticky bottle additives, raising their amount to greater than 60 ppm would decrease the L* and increase the haze values to such a great extent as to be readily visible to the eye as unacceptable.

The results of the tests also demonstrate that at equivalent reheat rates, the b* value of Base PET2 containing SGC was better (less yellow) than the Base PET3 resin. Thus, SGC at equivalent reheat rates outperforms Base PET3 in L*, b* and as discussed below, in COF. Surprisingly, preforms made with the Base PET2 and 200 ppm SGC2 were less yellow than a blank having no SGC and no other reheat additive. The addition of SGC either did not appreciably negatively impact b* or actually improved b*. It also would appear from the results that the addition of greater amounts of small sized SGC reduced the b* towards zero instead of increasing it.

The results also demonstrate that the smaller particle size additive, i.e. SGC2, gave preforms with higher skin temperature than the larger particle size additive (SGC3), when compared at the same loading. Thus, smaller sized SGC is the most preferred embodiment.

Accordingly, it can be seen that SGC in polyethylene terephthalate as a preferred embodiment, and especially SGC having a relatively small average particle size as the most preferred embodiment, gives an excellent combination of all the desired properties: low COF, low sidewall haze, high reheat, high L* and low positive b* values (less yellow).

The results in Table 4 also demonstrate that polyethylene terephthalate bottles containing glassy carbon can have sidewall bottle haze values, when measured at a thickness of 12.5 mils of 8.0% or less, preferably 6.0%, and more preferably 5.0% or less: Polyester compositions, including bottles, having a haze value of less than 4% and a COF of less than 0.30 and even 0.20 or less, with a b* of less than 3.80 and an L* of 70 or more having a 4.0°C reheat rate improvement are attainable.

The results in Table 4 also indicate that it is possible to obtain a preform shaped polyester composition having a final reheat temperature delta of 5.0 °C or more, an L* rating of about 70.0 or more, and a b* rating of less than 3.8. See examples corresponding to Base PET2 w/200 ppm SGC3, and 50, 100, and 200 ppm SGC2.

The results in Table 4 also indicate that it is now possible to obtain a preform shaped polyester composition having a final reheat temperature delta of greater than 10.0°C, more preferably 15.0°C or more, and an L* rating of 70 or more. For example, the results for Base PET2 with 100 and 200 ppm SGC2 had a final reheat temperature delta of greater than 10.0°C and 15.0°C respectively, and each has an L* rating of 70.0 or more.

Example 5

All the experiments run in example 4 were repeated, and additionally, a Base PET2 formulation containing talc was also evaluated to determine the COF performance characteristics, as well as other performance characteristics, of the Base PET2 containing SGC against an additive known in the literature to reduce the COF. The talc used was Polar Minerals "Micro-Tuff AG-609". The results of analysis are set forth in Table 5.

## Table 5

| Reference | Overall oven power (%) | Skin Temp (deg C) | Preform Skin Temperature | | | | Bottle COF Test Results | | | | | Preform Color | | | Bottle Sidewall Haze | Sidewall Bottle Thickness, Average |
|---|---|---|---|---|---|---|---|---|---|---|---|---|---|---|---|---|
| | | | #1 | #2 | #3 | Average | 1 | 2 | 3 | 4 | Average | L* | a* | b* | % | mils |
| Control Base PET2 w/ 50 ppm SGC3 | 84 | 109 | 108.2 | 109.8 | 109.5 | 109.2 | 1.246 | 1.148 | 1.232 | | 1.209 | 84.59 | -1.04 | 3.93 | 1.19 | 12.47 |
| Base PET2 w/ 100 ppm SGC3 | 84 | 112 | 111.8 | 112 | 112 | 111.9 | 0.549 | 0.49 | 0.768 | 0.402 | 0.552 | 82.81 | -1.02 | 3.95 | 1.73 | 12.72 |
| Base PET2 w/ 200 ppm SGC3 | 80 | 111 | 113 | 113.7 | 113.5 | 113.4 | 0.406 | 0.218 | 0.34 | 0.312 | 0.319 | 82.09 | -1.03 | 3.93 | 1.55 | 12.57 |
| Base PET2 w/ 50 ppm SGC2 | 78 | 112 | 116.2 | 117 | 116.7 | 116.6 | 0.178 | 0.167 | 0.163 | 0.2 | 0.177 | 79.8 | -1 | 3.79 | 2.47 | 12.49 |
| Base PET2 w/ 100 ppm SGC2 | 78 | 112 | 115.5 | 116.3 | 116.3 | 116.0 | 0.609 | 0.332 | 0.378 | 0.256 | 0.394 | 80.73 | -1.06 | 3.62 | 2.38 | 12.52 |
| Base PET2 w/ 200 ppm SGC2 | 74 | 112 | 120.9 | 121 | 118.8 | 120.2 | 0.182 | 0.174 | 0.186 | 0.175 | 0.179 | 77.28 | -1.07 | 3.4 | 2.78 | 12.51 |
| Base PET2 w/50 ppm talc* | 66 | 111 | 128.2 | 127.9 | 128.1 | 128.1 | 0.192 | 0.148 | 0.14 | 0.144 | 0.156 | 69.83 | -1.12 | 2.89 | 4.96 | 12.76 |
| Base PET2 w/100 ppm talc* | 84 | 110 | 111.2 | 110.2 | 110.2 | 110.5 | 0.412 | 0.423 | 0.312 | 0.429 | 0.394 | 83.7 | -0.99 | 4.4 | 2.5 | 12.61 |
| Base PET2 w/ 200 ppm talc* | 84 | 110 | 109.8 | 109.9 | 109.8 | 109.8 | 0.269 | 0.271 | 0.235 | 0.337 | 0.278 | 83.3 | -0.98 | 4.77 | 3.64 | 12.81 |
| Base PET3 | 84 | 110 | 110 | 110.2 | 110.3 | 110.2 | 0.216 | 0.265 | 0.268 | 0.257 | 0.252 | 82.02 | -0.87 | 5.86 | 5.92 | 12.50 |
| Commercial (CB12 reheat resin) | 84 | 124 | 124 | 124 | 124 | 124.0 | 1.226 | 1.312 | 1.272 | | 1.270 | 68.54 | -0.91 | 4.05 | 1.5** | |

* commercially available as Microtuff™ AG-609

** typical, not experimentally measured in these test runs

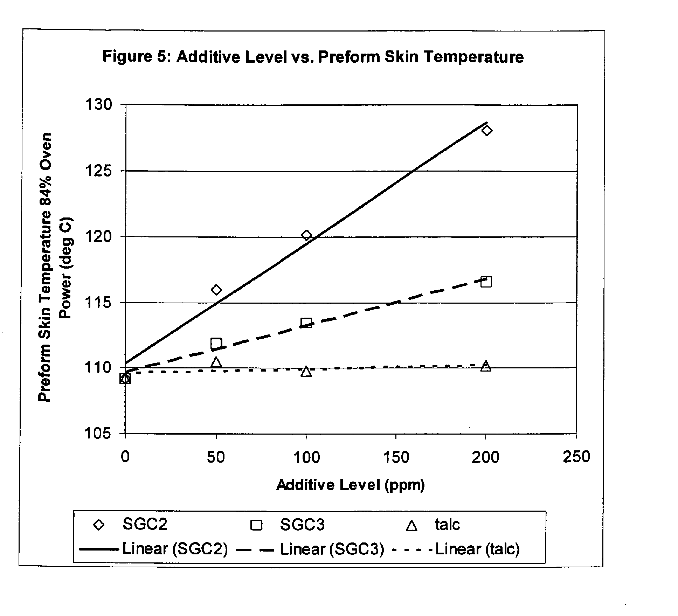

The results in Table 5 show that, although talc did lower the COF relative to Base PET2, it did not significantly increase the resin's preform skin temperature, i.e. it did not function as a reheat agent. This is illustrated in Figure 5, which graphically shows that the final skin preform temperature of the sample made with talc did not significantly increase and the curve remained substantially horizontal compared to the samples made with SGC. Figure 5 also illustrates the preference toward using smaller size glassy carbon particles because the rate of increase in reheat for SGC2 (smaller particle size) was superior to the rate of increase in reheat for SGC3 (larger particle size). However, SGC3 is clearly superior to talc as a reheat additive.

Table 5 indicates that a COF is 0.2 or less can be obtained in polyethylene terephthalate compositions. In our experiments, this COF value was found to be equivalent to a water spray on the bottles, which some manufacturers use as a solution to the problem of bottles sticking together. None of the compositions containing talc, a conventional agent for reducing the COF in polyester compositions, could reduce the COF below 0.2 in the tested quantities, while many of the compositions containing glassy carbon successfully reduced the COF of the compositions to below 0.2.

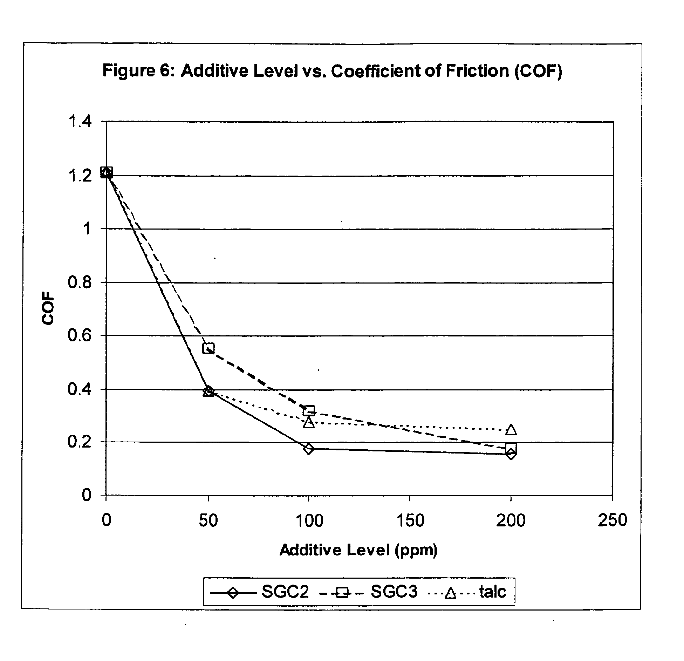

Figure 6 graphically illustrates the effect of the SGC2, SGC3 and talc additives on bottle coefficient of static friction (COF) from the data taken in Table 5. Figure 6 shows that only the SGC additives are capable of achieving a coefficient of 0.2 or less. Further it shows that the smaller size sticky bottle additive, SGC2, is more effective at reducing the COF than larger size particles of glassy carbon represented by SGC3.

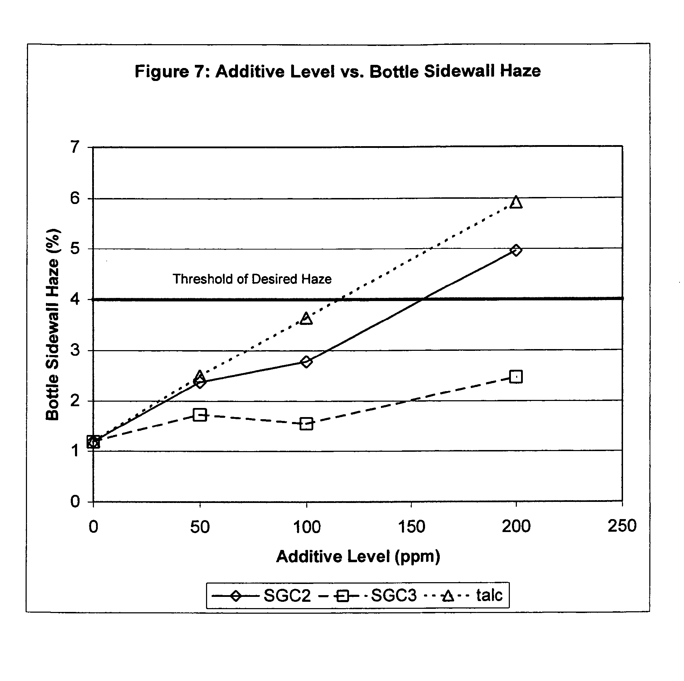

Figure 7 illustrates the relationship between an additive concentration and bottle sidewall haze taken from the data in Table 5. One of the measures to determine the visual appeal of a bottle is sidewall bottle haze. Currently, the bottle industry desires to manufacture bottles having a sidewall haze of about 4% or less to provide high clarity. While this measure is flexible, especially where the brightness of the preform is high, it would nevertheless be desirable to provide a bottle which has a haze value of 4.0% or less. To produce a bottle with low haze, it is preferred that the sticky bottle additive does not impart a sidewall haze greater than 4.0%. All of the additives tested increased the bottle sidewall haze as shown in Figure 7. However, the rate of increase in haze is much less with SGC2 and SGC3 compared to talc. The 4% haze limit is reached at an additive level of about 110 ppm for talc, at about 150 ppm of SGC2 and at greater than 200 ppm for SGC3.

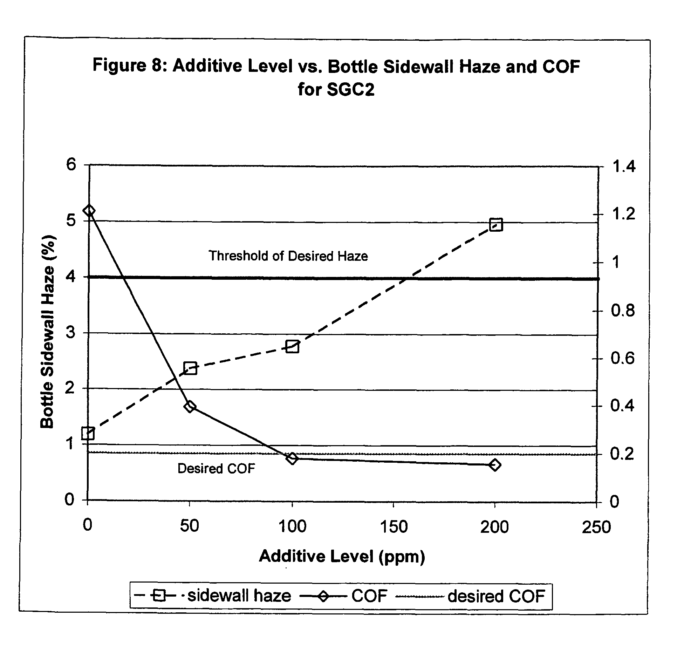

Figure 8 graphically plots the COF and bottle haze for SGC2 taken from Table 5 along with the threshold haze limit of 4% and desired COF value of 0.20 or less. This Figure 8 illustrates that the desired COF of 0.20 is obtained at around 100 ppm, and the bottle sidewall haze is about 2.8 %, well below the acceptable threshold of 4%.

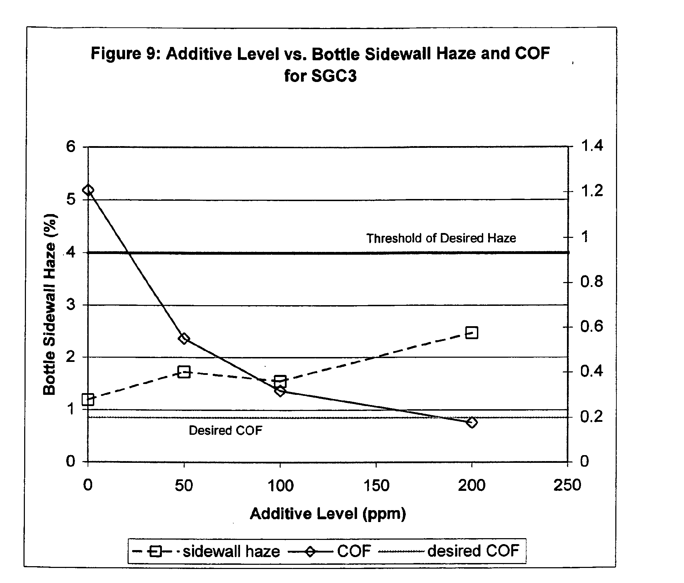

Figure 9 graphically plots the COF and bottle haze data for SGC3 from Table 5. In order to achieve the desired COF 0.2 or less, approximately 200 ppm of additive is required. Even at this level of additive, however, the sidewall haze is still well below the threshold limit of 4%. Comparison of the results for SGC2 and SGC3 indicates that, as between smaller and larger average sized particles, the most preferred additive for low COF and low haze is the smaller particle size (SGC2 which is 2 - 12 microns average particle size) compared to the larger particle size (SGC3 which is 10 - 40 microns average particle size) because less additive is needed to reach the desired COF.

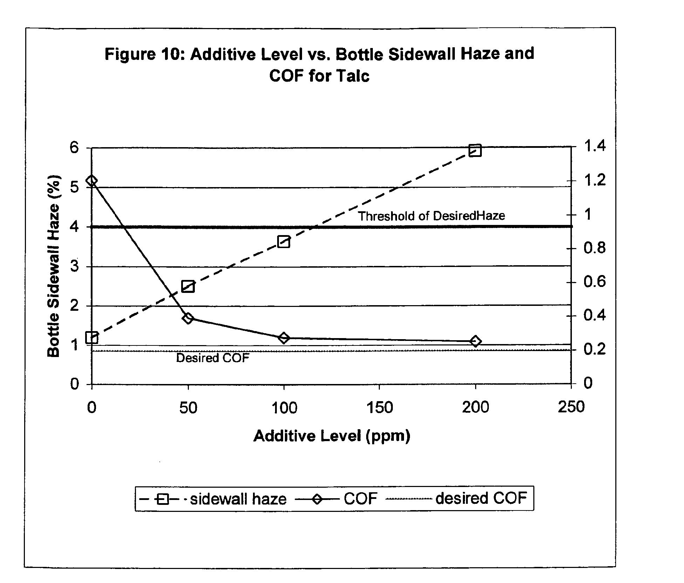

Figure 10 graphically plots the COF and bottle haze data from Table 5. This plot illustrates that the desired COF of 0.2 or less is not achievable with talc even at concentrations of up to 200 ppm. While the COF of 0.20 using talc is approached, but not achieved, at talc levels of around 100 ppm, at this level the haze is very close to the 4.0% ceiling, and the ceiling is exceeded at about 110 ppm talc. Thus, these results in this Example show that the SGC additives have superior performance to talc in lowering bottle coefficient of static friction with low bottle sidewall haze and in increasing the preform reheat rate. Furthermore, they show that the preferred embodiment of the invention is the smaller particle size SGC, due to its more efficient lowering of COF and increasing reheat rate relative to the larger particle size material.

The results from Table 4 and Table 5 also indicate that it is now possible to provide a polyester composition having a final reheat temperature of 5.0°C or more, a b* rating of 3.8 or less, more preferably 3.7 or less and a coefficient of static friction of 0.6 or less, more preferably 0.5 or less, and most preferably 0.4 or less. For example, Base PET2 with SGC2 meets all of these criteria.

The results from Tables 4 and 5 also indicate that it is now possible to manufacture a polyester composition having a final reheat temperature delta of 5.0°C or more and an L* value of at least 70, more preferably at least 75, and a coefficient of static friction of 0.6 or less, more preferably 0.5 or less, and most preferably 0.4 or less. This is shown by the examples of Base PET2 containing 200 ppm SGC3 and all the examples containing SGC2 in both tables.

The results from Tables 4 and 5 also indicate that it is now possible to obtain a polyester composition having a reheat additive in an amount ranging from 50 ppm to 150 ppm which increases the reheat rate of the composition by at least 2.5°C for the first 50 ppm of additive and reduces the coefficient of static friction of the composition by at least 20% for the first 50 ppm of additive, each relative to a composition without said additive, wherein the composition has a sidewall bottle haze value of 9% or less measured at a thickness of no greater than 12.5 mils, preferably 8% or less, more preferably 5% or less, and most preferably each value determined using a bottle sidewall having a thickness of 12.5 mils.

The results from Tables 4 and 5 also demonstrate that it is now possible to obtain a polyester composition, preferably a beverage bottle, comprising a reheat additive in an amount of at least 50 ppm and having a bottle sidewall haze value of less than 8%, preferably 5.5% or less and such that the additive selected does not elevate the haze value of the composition by more than 8%, preferably by more than 5.5%, when measured throughout a reheat additive concentration ranging from 50 ppm to 200 ppm (whether or not the amount of additive actually used is up to 200 ppm). All of the tested polyester compositions containing SGC maintained a bottle sidewall haze level of 5.5% or less throughout a range from 50 ppm to 200 ppm.

## EP 1 433 810 A1

**Claims**

1. A thermoplastic polymer composition comprising glassy carbon particles distributed within a thermoplastic polymer continuous phase which is solid at 25°C and 1 atm.

2. The thermoplastic composition of claim 1, wherein the thermoplastic composition comprises a polyester polymer composition.

3. The thermoplastic composition of claim 1 or 2, wherein the polyester composition is in the form of a beverage bottle.

4. The thermoplastic composition of any one of claims 1 to 3, wherein the polyester composition comprises spherical glassy carbon.

5. The thermoplastic composition of any one of claims 1 to 4, wherein the polyester composition comprises spherical glassy carbon having an average particle size ranging from 0.1 to 40 microns.

6. The thermoplastic composition of claim 5, wherein the average particle size ranges from 0.1 to 12 microns.

7. The thermoplastic composition of any one of claims 1 to 6, wherein the polyester composition comprises a polymer containing at least 85 mole% of polyethylene terephthalate units on a calculated basis and is in the form of a preform.

8. The thermoplastic composition of any of claims 1 to 7, comprising a preform having a b* color of less than 4.0 and an L* color of at least 70.

9. The thermoplastic composition of any one of claims 1 to 8, wherein the polyester comprises at least 85 mole % of ethylene terephthalate units and the glassy carbon comprises spherical glassy carbon.

10. The thermoplastic composition of claim 9, wherein the amount of spherical glassy carbon in the polyester composition ranges from 60 ppm to 250 ppm based on the weight of the polymer.

11. The thermoplastic composition of claim 1, wherein the thermoplastic composition comprises at least 95 wt.% of a polyester composition, said polyester composition comprising polyethylene terephthalate, and wherein the thermoplastic composition comprises spherical glassy carbon.

12. The thermoplastic composition of anyone of claims 1, 2, 7, and 8, wherein the glassy carbon is in the shape of spheres, platelets, needles, or cylinders.

13. The thermoplastic composition of anyone of claims 1 to 12, wherein the glassy carbon is in the shape of spheres having an aspect ratio of 2 or less as measured along each combination of any two x, y and z particle axis.

14. The thermoplastic composition of claim 13, comprising spherical glassy carbon having an average particle size ranging from 0.1 to 40 microns.

15. The polymer composition of any one of claims 1 to 4, wherein the modified glassy carbon is coated with an organic polymer.

16. An article comprising the polymer composition of anyone of claims 1 to 15, wherein the polymer is an article in the shape of a preform or bottle.

17. A process for manufacturing a polyester composition according to any one of the preceding claims comprising combining glassy carbon with a polyester composition or a composition comprising polyester precursors.

18. The process of claim 17 for manufacturing a polyester composition, comprising adding a liquid or solid concentrate comprising glassy carbon and polyethylene terephthalate to bulk polyethylene terephthalate after melt phase polycondensation of the bulk polyethylene terephthalate and before or at a stage for injection molding the polyester composition.

**19.** The process of claim 18, wherein the concentrate is added as a liquid to a melt of the bulk polyethylene terephthalate.

**20.** The process of claim 18, wherein the concentrate is fed to a melt of bulk polyethylene terephthalate in an injection molding machine or is added to a feed of bulk polyethylene terephthalate to an injection molding machine.

**21.** A polyester composition having an L* value, and a reheat index which increases between 0.95 and 1.15 with an increasing amount of an reheat additive present in the polyester composition, wherein the slope of a curve representing increasing amounts of said additive plotted against L* measurements on a y axis and the reheat index on an x axis is |80| or less, as measured by at least three data points anywhere between 0.95 and 1.15 with respect to reheat index values using intervals of at least 0.03 units and as measured using three stacked discs each having a thickness of 67 mils.

**22.** The polyester composition of claim 21, wherein the polyester composition has an L* of at least 75.

**23.** A polyester preform having a final reheat temperature delta of 5°C or more, an L* rating of 70 or more, and a b* rating of 3.80 or less.

**24.** The preform of claim 25, wherein said preform comprises polyethylene terephthalate and glassy carbon.

**25.** A polyester bottle made from the preform of claim 23.

**26.** A concentrate composition comprising glassy carbon in an amount ranging from 0.05 wt.% to about 35 wt.% and a polymer in an amount ranging from at least 65 wt.% up to 99.95 wt.%, each based on the weight of the concentrate composition.

**27.** The concentrate composition of claim 26, wherein the glassy carbon comprises spherical glassy carbon.

**28.** The concentrate composition of claim 26, wherein the spherical glassy carbon is present in an amount ranging from 2 wt.% to 20 wt.% and the polymer comprises polyester, polyolefin, polycarbonate, or a mixture thereof in an amount ranging from at least 80 wt.% up to 98 wt.%, each based on the weight of the concentrate composition.

**29.** The concentrate composition of claim 26, wherein the polymer comprises a polyethylene terephthalate.

**30.** A polyester preform having a final reheat temperature delta of 10°C or more and an L* rating of greater than 70.

**31.** The polyester preform of claim 30, wherein the preform comprises polyethylene terephthalate and glassy carbon.

**32.** A polyester beverage bottle made from a preform, wherein the preform has a final reheat temperature delta of 5°C or more and a b* rating of less than 3.8, and the bottle has a coefficient of static friction of 0.6 or less.

**33.** The polyester bottle of claim 32, further wherein the preform has an L* value of 70 or more.

**34.** The polyester bottle of claim 32, wherein the b* is 3.7 or less and wherein the bottle has a coefficient of static friction of 0.4 or less.

**35.** The polyester bottle of claim 33, wherein the L* of the preform is 75 or more.

**36.** The polyester bottle of claim 34, wherein the polyester comprises an additive comprising glassy carbon.

**37.** A polyester composition comprising an additive in an amount ranging from 50 ppm to 150 ppm which functions to increase the reheat rate of the composition by at least 2.5°C for the first 50 ppm of additive and reduces the coefficient of static friction of the composition by at least 20% for the first 50 ppm of additive, each relative to a composition without said additive, wherein the composition has a sidewall bottle haze value of 9% or less.

**38.** The polyester composition of claim 37, wherein said polyester composition comprises polyethylene terephthalate.

è..

## Figure 1
## Emission Spectrum of Blackbody Radiator
## at 2200 degrees C

Figure 2: Reheat Index vs. L* for
Various Reheat Agents in Base PET2

Figure 3: Reheat Index vs. Haze for Various Reheat Agents in Base PET2

Figure 4: Reheat Index vs. L* for Various Reheat Agents in Base PET5

Figure 5: Additive Level vs. Preform Skin Temperature

Figure 6: Additive Level vs. Coefficient of Friction (COF)

Figure 7: Additive Level vs. Bottle Sidewall Haze

Figure 8: Additive Level vs. Bottle Sidewall Haze and COF for SGC2

Figure 9: Additive Level vs. Bottle Sidewall Haze and COF for SGC3

Figure 10: Additive Level vs. Bottle Sidewall Haze and COF for Talc

EP 1 433 810 A1

<table>
<tr><td colspan="2">**European Patent Office**</td><td>**EUROPEAN SEARCH REPORT**</td><td>Application Number<br>EP 03 02 6662</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 124 397 A (KANAZAWA SHUJI ET AL) 23 June 1992 (1992-06-23)<br><br>* claims 1,3; examples *<br>----- | 1,2,4,9, 17,26, 28,29 | C08K3/04<br>C08L67/02 |
| | | | TECHNICAL FIELDS SEARCHED (Int.Cl.7)<br><br>C08K |

The present search report has been drawn up for all claims

| Place of search | Date of completion of the search | Examiner |
|---|---|---|
| MUNICH | 5 April 2004 | Engel, S |

EPO FORM 1503 03.82 (P04C01)

## ANNEX TO THE EUROPEAN SEARCH REPORT
## ON EUROPEAN PATENT APPLICATION NO.

EP 03 02 6662

This annex lists the patent family members relating to the patent documents cited in the above-mentioned European search report.
The members are as contained in the European Patent Office EDP file on
The European Patent Office is in no way liable for these particulars which are merely given for the purpose of information.

05-04-2004

| Patent document cited in search report | | Publication date | Patent family member(s) | | Publication date |
|---|---|---|---|---|---|
| US 5124397 | A | 23-06-1992 | JP | 3044468 B2 | 22-05-2000 |
| | | | JP | 4001262 A | 06-01-1992 |
| | | | JP | 2935051 B2 | 16-08-1999 |
| | | | JP | 4004295 A | 08-01-1992 |
| | | | JP | 2935052 B2 | 16-08-1999 |
| | | | JP | 4004296 A | 08-01-1992 |
| | | | JP | 2884363 B2 | 19-04-1999 |
| | | | JP | 4005492 A | 09-01-1992 |

EPO FORM P0459

For more details about this annex : see Official Journal of the European Patent Office, No. 12/82